# EUROPEAN PATENT SPECIFICATION

(11) **EP 3 683 781 B1**
(45) Date of publication and mention of the grant of the patent: **30.11.2022**
(21) Application number: 18855568.4
(22) Date of filing: 31.08.2018
(51) Int. Cl.: G08G 1/14, G06Q 10/02

(54) **PARKING SPACE SERVICE AND MANAGEMENT SYSTEM AND METHOD BASED ON PARKING SPACE STATE INFORMATION**
PARKPLATZDIENST- UND VERWALTUNGSSYSTEM UND VERFAHREN AUF DER BASIS VON PARKPLATZZUSTANDSINFORMATIONEN
SYSTÈME ET PROCÉDÉ DE GESTION ET DE SERVICE D'ESPACE DE STATIONNEMENT SUR LA BASE D'INFORMATIONS D'ÉTAT D'ESPACE DE STATIONNEMENT

(30) Priority: 15.09.2017 CN 201710835469; 06.12.2017 CN 201711273605
(43) Date of publication of application: 22.07.2020
(73) Proprietor: Router Technologies (Hangzhou) Inc., Zhejiang 310018 (CN)
(72) Inventor: XU, Yijun, Hangzhou, Zhejiang 310018 (CN); XU, Yueming, Hangzhou, Zhejiang 310018, (CN)
(74) Representative: Deans, Michael John Percy
(86) International application number: PCT/CN2018/103563
(87) International publication number: WO 2019/052353

(56) References cited:
- CN-A- 104 376 607
- CN-A- 106 355 944
- CN-A- 106 506 501
- CN-A- 108 010 373
- DE-A1-102015 204 364
- US-A1- 2011 099 126
- US-A1- 2014 266 802
- US-A1- 2015 138 362

## Description

### FIELD OF THE DISCLOSURE

This disclosure relates to the technical domain of intelligent transport system, in particular to a parking space service and management system and method based on parking space state information.

### BACKGROUND

The development of car parking in the United States, the United Kingdom, Germany, Japan, Singapore and other countries has broadly experienced the stages of on-street parking spaces, surface ground car parks, underground car parks and mechanical structure parking garages. In view of the history of and the current situation of the development for planning and layout of car parks in these developed countries, it has basically experienced the passive increasement in the number of parking spaces to meet the growth of parking demand, and gradually developed to control land use with parking demand, to control traffic volume with the supply of parking spaces, that is, from passive construction to active guidance and integrated with the adjustment of the traffic structure, to combine rational layout of the car parks with increased utilization of the existing parking spaces in long-term planning, construction and management practices.

Same as the development experience of the car park for the most of above-mentioned developed countries, the parking challenges in China, as affected by the development of economy, population and motor vehicles, has become continuously significant with the rapid development of the social and economic population and the accelerating process of urban motorization. The growth of vehicles, especially the rapid development of private cars, is the most important factor in the demand growth for the parking spaces. However, in view of the current state of the parking spaces for and the situations of the rapid development for motor vehicles in China, the supply and demand imbalance between parking spaces and vehicles will become increasingly serious. It is far from enough to meet the demands of urban development simply from strengthening planning of and increasing construction for the car parks.

The current state of traditional parking industry in China now encounters four major pain points: big total quantity gap, dispersive structure, discrete management and low intelligent level. This directly leads to many such problems as challenges in searching an available parking space, degraded parking experience, low circulating efficiency of the parking spaces and increased management cost. Traditional car parks have not been formed a centralized network due to random distribution and mutual independence, resulting in inconsistent information of the parking spaces. The utilization efficiency of the parking spaces is lower particularly in private car parks in residential areas, organizations and entities. At the same time, with the increasing in number and scale, worsening situations in supply and demand imbalance between the parking spaces and vehicles of urban car parks, lower efficiency of attended service and management of traditional parking and isolated information of the car parks, it is especially a challenge to meet the increasing requirements from drivers for efficient traffic and parking service and management. This was the time for the deployment of monitoring, guidance, gate control, automatic vehicle license plate recognition and other means to realize intelligent parking services and management.

However, the existing technology of the service and management still exhibited problems to meet the actual parking demand. A parking space state information for vehicle occupancy cannot satisfactorily meet the requirements for booking of the parking space and parking, shared service, permit management, and management for time period and duration limit. Vacant parking spaces may not be available due to parking space reservation, unshared time period and fault of parking space equipment. Such vacant information may mislead more drivers to approach the parking space as it is available. Once the parking space is occupied by mistake, the driver reserved for the parking space and the owner of the shared parking space will face conceivable troubles. Facing problems of booking, parking, payment, amendment and popular interrupted communication, compatibility problem of reserved and park-now customers, as well as that of customers with and without a driver terminal, it will be a big challenge, to a considerable extent, to tackle these problems simply by relying on the driver terminal, creating great inconvenience to the car parks and the drivers; The normal parking order has been seriously affected by random parking behaviors from ignorance of stipulations of signs and markings, prohibitions, time period and duration limit etc. Generalized considerations and effective service and management means are insufficient in general from the existing systems. The existing management means are more or less limited to the individual interests of car park owners and drivers, but not social and group interests other than interests of the car park owners or drivers. Since the parking challenges could not be solved by rules and conventions, additional traffic pressure, environmental pollution and consumption of resource have infringed the group interests of more non-traffic participants.

The parking space management method referred to invention patent of Parking space reservation method and system, service platform for parking space information, with patent No. 201610752210.5 includes: obtaining parking space information from car parks and parking demand information from users, the parking space information including at least state information for current check-in and booking of individual parking space of the car parks; the parking demand information including at least a parking area of destination, a scheduled time for check-in and information including at least a parking area of destination, a scheduled time for check-in and check-out of the parking space; booking a parking space of the car park according to the parking space information and the parking demand information, and providing feedback of a booking result to the car park and the user; during the period for check-in of the parking space, extending the time for check-out of the parking space or amending the parking space as checked-in for the user according to its parking extension request and the parking space information of the current car park. By obtaining real-time, effective and complete parking space information, intelligent booking and management of the parking spaces can be realized to improve users' travelling and parking challenges. This patent has the following problems: 1. the patent realizing parking space management based on booking of the parking spaces, not applicable to instances of park-now and users without a parking space booking terminal; 2. since the check-in and check-out of the parking spaces being based on the use of the parking space booking terminal, in case of a random parking, that is, the parking space code of the actual parking inconsistent with that of the booking, this being managed only at others' report or supervisor's tour inspection, resulting in delayed management; 3. since the check-in and check-out of the parking spaces being based on the use of the parking space booking terminal, in case of a user without the parking space booking terminal, or for intended violation (check-out of the parking space at specified duration limit, but actually no removal of the vehicle from the parking space), this being managed only at others' report or supervisor's tour inspection, resulting in delayed management; and before correction been made, the parking space reservation system presenting the above-mentioned parking space as available but actually not, resulting in insufficient management.

In US 2014/0266802 Love a device may receive map data that identifies a parking facility located in a particular geographic area; identify the parking facility based on the map data; receive parking data that identifies an available or an unavailable parking space located in the parking facility; combine the map data and the parking data to form combined data; and provide the combined data for display. The combined data may cause a map of the particular geographic area to be displayed. The map may have a representation of the parking facility, a representation of a number of available or unavailable parking spaces in the parking facility, or a representation of an entrance of the parking facility.

US 2011/0099126 Belani et al. discloses a parking policy management system that helps identify and enforce parking violations in real-time. By monitoring sensors distributed in a parking area, the system will determine whether one or more parking policies have been violated. The types of parking policies the system can monitor include duration, time of day, unauthorized vehicle, special permit parking and paid parking. When a violation of a policy is detected, a notification may be delivered to enforcement personnel through the Internet, personal digital assistants (PDAs), cell phones, in-vehicle dashboards, and other means.

US 2015/0138362 discloses a computer-implemented system and method for managing a multiplicity of motor vehicle parking spaces through a centrally located server. A plurality of smart parking devices that are each physically proximate to and which correspond to at least one of the parking spaces is interfaced with the server. A plurality of vehicle occupancy sensors that are also each physically proximate to and which correspond to at least one of the parking spaces is interfaced with the server. Use of the parking spaces is managed. Occupancy of each of the parking spaces by a motor vehicle is sensed through the nearest vehicle occupancy sensor. Use of the parking space is processed based on an identity of a driver of the motor vehicle through the nearest smart parking device. Emergency services for an individual are notified through one of the mart parking devices upon request.

To summarize, there is an urgent need for a collaborated management, enabling the drivers to find easily and quickly available parking spaces for parking, at the same time compatible with parking requirements for customers with a driver terminal and without a driver terminal, and satisfactory for reserved parking, park-now and parking spaces sharing.

### SUMMARY OF THE DISCLOSURE

This disclosure aims to tackle technical problems, by proposing a system for realizing parking space service and management based on parking space state information, and parking service and management system compatible with parking requirements for customers with a driver terminal and customers without a driver terminal, and a method for parking space service and management according to this system.

In order to tackle the above technical problems, we provide a parking space service and management system based on parking space state information as defined in claim 1. We further provide a method as defined in claim 4. The dependent claims further define detailed embodiments. The combinations of elements and features introduced in this section do not necessarily correspond to the subject-matter claimed. In particular, the claimed solution defines the use of a driver terminal.
The said parking space service and management system comprises a cloud server, and a supervisor terminal, a driver terminal, a vehicle detection module, a field terminal component and a parking enforcement terminal connected by signal to the cloud server; The said supervisor terminal, the driver terminal, the field terminal component and the parking enforcement terminal are all integrated with an electronic map module connected by signal with the cloud server;
The said supervisor terminal and the driver terminal are connected by signal, and both the supervisor terminal and the driver terminal are connected by signal to the vehicle detection module, the field terminal component and the parking enforcement terminal;
The said cloud server is used to receive, store, process and update all car park information, vehicle information, transaction information and heartbeat message; Wherein, the car park information includes at least a parking space information and a parking space state information of the same car park; The said parking space information includes at least a parking space code (geographic location), dimensions of the parking spaces, an available time period and limit for a parking duration; The said parking space state information is kept under the parking space code, including at least the parking space code, a parking space state and a time for state change Wherein, the parking space state includes at least 13 types of states for normal occupation, occupation without check-in, occupation without check-out, parking space available, parking space reserved, parking space vacant without check-out, parking space faulted, parking space unavailable, parking space specific for permit parking, parking space respondent, rechargeable parking space and parking space for automatic parking; The parking space information also includes a parking space specific for permit parking, a rechargeable parking space and a parking space for automatic parking; The vehicle information includes at least a vehicle license plate number, as well as a parking space demand information, a parking space reservation information, a parking information and a vehicle respondent kept under the vehicle license plate number; The said parking space demand information includes at least a destination name, the vehicle license plate number, a parking start time and a parking duration. The said parking space reservation information includes at least the parking space code, the vehicle license plate number, the scheduled parking start time and the parking duration; The parking information includes at least the vehicle license plate number and the parking space code, as well as the time for check-in and check-out of the parking space. The said check-in of the parking space refers to a report or an action for a driver to express his parking intention, to accept terms and conditions of the parking service and management, and to confirm an initiation of a parking. The said check-out of the parking space refers to a report or an action for a driver to acknowledge a parking fact, to accept the terms and conditions of the parking service and the management, and to confirm a termination of a parking; The said vehicle respondent means a vehicle in a process of hearing for an abnormal complaint;
The said cloud server synchronizes the parking space information, the parking space state information of the above-mentioned individual parking space, as well as the parking space reservation information and the parking information of a parking at the corresponding parking space to the electronic map module; The said electronic map module receives the information distributed by the cloud server and has this information presented through the supervisor terminal, the driver terminal, the field terminal component and the parking enforcement terminal;
The said supervisor terminal is used to upload the parking space information to the cloud server, monitor an abnormal state of the parking space and notify a supervisor for in-time managing, and assist the driver to book the parking space, amend or cancel a booking, check in the parking space, check out the parking space and collect a fee. It is also used to collect evidence for the abnormal state of the parking space (including to obtain information for the vehicle license plate number based on image recognition) and have it distributed to the driver terminal for managing or the parking enforcement terminal for accusation; The supervisor is presented the parking space state information in the car park through the electronic map module of the supervisor terminal and navigate to the corresponding parking space according to the positioning and navigation of the electronic map module. The cloud server synchronizes the parking space state information, the parking space reservation information and the transaction information to the supervisor terminal;
The said driver terminal is used to transmit the parking space demand information to the cloud server for parking space reservation and amendment; It is also used to check in the parking space, check out the parking space, make payment and extend the parking duration, and to collect evidence for the abnormal state of the parking space (including to obtain information for the vehicle license plate number based on image recognition) and have it distributed to the supervisor terminal for report and complaint, or to the parking enforcement terminal for accusation. The driver is presented the parking space state information in the car park through the electronic map module of the driver terminal and navigate to the corresponding parking space according to the positioning and navigation of the electronic map module. The cloud server synchronizes the parking space demand information, the parking space reservation information, the entry and exit information, the parking information and the transaction information to the driver terminal;
The said vehicle detection module is used to detect a parking space state (the parking space vacant, the parking space occupied) and/or automatically recognize the vehicle license plate number, and transmit an occupancy state information of the parking space to the cloud server, the supervisor terminal, and the driver terminal (at the vehicle detection module capable of automatic recognition of the vehicle license plate number); the occupancy state information of the parking space includes the parking space code, the parking space occupancy state, and the time for state change, and also includes the vehicle license plate number if detected;
The said field terminal component comprises a parking space field terminal and a car park field terminal; Both the said parking space field terminal and the car park field terminal include a displayer, and a communication module, a payment module and a human-machine interface connected to the displayer. The payment module is connected to the communication module and the human-machine interface, respectively. The said displayer presents the parking space information, the parking space state information and the parking information of the corresponding parking space in text, graphic and/or acousto-optic signal; The detailed display contents include the following;
In case of normal occupation, the vehicle license plate number, the time for check-in of the parking space and the parking duration, sign and color for normal occupation (such as flashing green) are presented;
In case of occupation without check-in, an entry time for the vehicle, an overdue time for check-in, sign and color for occupation without check-in (such as flashing red) are presented; At no check-in or failed to check-in of the said vehicle, the vehicle license plate number for occupation without check-in is missing. Extended standing after check-out of the parking space, the vehicle license plate number corresponds to that of the vehicle as checked-out;
In case of occupation without check-out, the vehicle license plate number, the time for check-in and the limit for the parking duration, the overdue time for no check-out, sign and color for occupation without check-out (such as flashing orange) are presented;
In case of the parking space available, the available period and the limit for the parking duration of the parking space, as well as sign and color for the available parking space (such as flashing white) are presented;
In case of the parking space reserved, the vehicle license plate number, the scheduled parking start time and the parking duration, sign and color for the parking space reserved (such as flashing blue) are presented;
In case of vacancy without check-out, the vehicle license plate number, the time for check-in, the time for vehicle exit, the overdue time without check-out, sign and color for vacancy without check-out (such as flashing orange) are presented;
In case of the parking space faulted, shutdown for fault, fault reason and duration limit for the shutdown, fault sign and color (such as flashing purple and flashing red) are presented;
In case of the parking space unavailable, usages (such as road traffic, street cleaning and road-work), unavailable period, unavailable sign and color (such as flashing purple) are presented; The parking space respondent is processed as the parking space unavailable, unavailable period, unavailable sign and color (such as flashing purple) are presented;
In case of the parking space specific for permit parking, at the parking space available, the available period and the limit for the parking duration, the type of the parking permit, as well as composite sign and color (such as flashing blue and flashing white) for available and permit parking are presented, flashing blue indicating specific for permit parking; At the parking space normally occupied, the vehicle license plate number, the time for check-in and the limit for the parking duration, the type of the parking permit, as well as the composite sign and color (such as flashing blue and flashing green) for permit parking and normal occupation are presented; The remaining states are processed, where applicable, as the above-mentioned parking space reserved, vacancy without check-out, occupation without check-in, occupation without check-out and the parking space faulted, and additionally a code number and validity of the parking permit. When a shared parking space is reserved for its owner, that is, the parking space is for private use, the vehicle license plate number as reserved, as well as the period for holding are presented without the parking permit;
In case of the parking space for temporary parking, at the parking space available, the usage of the parking space, the parking duration as well as the corresponding composite sign and color (flashing yellow and flashing white) for available and the parking space for temporary parking are presented, flashing yellow indicating the parking space for temporary parking. At the parking space normally occupied, the vehicle license plate number, the remaining time, the composite sign and color (flashing yellow and flashing green) for the parking space for temporary parking and normal occupation are presented; The remaining states are processed, where applicable, as above-mentioned vacancy without check-out, normal occupation, occupation without check-in, occupation without check-out and the parking space faulted;
In case of the rechargeable parking space, significant physical sign for EV power supply equipment (charging station) on-site at the parking space, and additionally special sign for electric vehicles may be used, for example, standardized acronym text or graphic of EV, electric vehicle, a battery, a power plug or non-fuel vehicle etc. and even logo of a recognized representative brand of electric vehicles, for example, Tesla; Other signs and markings are the same as those for the general parking spaces;
In the case of the parking space for automatic parking, specific sign for parking space for automatic parking are adopted, including texts and graphics available for the drivers to recognize or codes of its infrastructure for automatic identification by the vehicles; Text or graphic symbol may include an Autonomous Vehicle (AV), a self-driving vehicle, an Automatic Valet Parking System (AVPS), an Automatic Parking Facility (APF) or an Automatic Vehicle Storage and Retrieval System (AVSRS), an Autonomous Vehicle (automatic driving vehicle) and a Driverless Vehicle (vehicle without a driver); The automatic identification codes include the vehicle license plate number and the vehicle location, the parking space code and the parking space location, requirements for communication between the vehicle and the surrounding vehicles (V2V) as well as between the vehicle and the surrounding infrastructure (V2I), and requirements for on-board unit (OBU) and roadside equipment (RSE); The above autonomous vehicle, also known as driverless vehicle, computer-driven vehicle or wheeled mobile robot, is an intelligent vehicle that can drive itself manipulated by a computer system. Automatic assisted parking system is a kind of automatically supported parking system to park the vehicle in place without human control; Automatic parking facility is a parking garage with more than one parking space (usually multiple parking spaces over multiple storeys) and designated pick-up/drop-off locations, where an ordinary vehicle is automatically moved from the drop-off area to the parking space and automatically retrieved from the parking space to the pick-up area at the end of parking; V2V refers to wireless communication in an intelligent transportation system that allows information to be exchanged between the vehicles, while V2I refers to wireless communication in the intelligent transportation system that allows information to be exchanged between the vehicle and the infrastructure; In case of the parking spaces for automatic parking, where required for the driver to recognize, other signs and markings are the same as those for general parking spaces; The parking space for automatic parking, specific for vehicles to identify (autonomous vehicles) or automatic garage to identify (Automatic Parking Facilities), other signs and markings are not required.

The said communication module is connected by signal to the cloud server, the supervisor terminal, the driver terminal and the parking enforcement terminal respectively; The cloud server synchronizes the parking space information, the parking space state information, the parking information and the reservation information corresponding to all parking spaces in the car park to the car park field terminal; The cloud server synchronizes the parking space information, the parking space state information, the parking information and the reservation information corresponding to the parking space to the parking space field terminal;
The said parking enforcement terminal is used for supervising illegal parking; The parking enforcement terminal may be used to check the parking information of any parking space, and collect evidence, record and process an violation vehicle by comparing the parking information with the actual vehicle standing information; The enforcement officer checks the abnormal information for the parking space in the car park through the electronic map module of the parking enforcement terminal and navigate to the corresponding parking space according to the positioning and navigation of the electronic map module. The parking enforcement terminal is also used to receive, store and process complaints or accusations from the supervisor terminal and the driver terminal, and to enforce the violation vehicles after verifying the complaints or accusations.

As improvement of the parking space service and management system based on the parking space state information of this disclosure:
The said electronic map module includes the planar graph of parking space state with navigation function; The said planar graph of parking space state includes the parking space information, the parking space state information, the parking space reservation information and the parking information of all parking spaces in the car park;
The said parking space field terminal presents the corresponding parking space information, the parking space state information, the parking space reservation information and the parking information, which is used for the driver to book the parking duration, as well as check in and check out the parking space and make payment;
The said car park field terminal presents the planar graph of parking space state, as well as the parking space information, the parking space state information, the parking space reservation information and the parking information of all parking spaces in the car park, which is used for the driver to book the parking duration, as well as check in and check out the parking space and make payment.

As improvement of the parking space service and management system based on the parking space state information of this disclosure:
The said supervisor terminal comprises a PC supervisor terminal and an APP supervisor terminal with camera function;
The said PC supervisor terminal presents the parking planar graph of the car park and dynamic information of vehicle entry and exit of the car park. The said dynamic information of vehicle entry and exit includes at least the parking space code, the vehicle license plate number, the scheduled parking start/end time, the actual parking start/end time, entry or exit, check-in or check-out of the parking space, type of amendment and time, parking space reallocation and the corresponding parking space state information; The dynamic information of vehicle entry and exit takes time as master axis, with current information ahead of historical information, and abnormal information prior to normal information. The APP supervisor terminal is used to present the planar graph of parking space state and provide navigation for the supervisor, and it is also used to realize the parking space management, collect evidence and make complaints, and book, check in and check out the parking space on behalf of customers and accept payment, as well as collect evidences of violation vehicles (including to obtain information for the vehicle license plate number based on image recognition) and report it to the parking enforcement terminal;
The said driver terminal comprises a PC driver terminal and an APP driver terminal with camera function;
The said PC driver terminal is used to present the planar graph of parking space state. The APP driver terminal is used to present the planar graph of parking space state and provide navigation for the driver, and is also used for collect evidence and make complaints, book the parking space on-site, make payment, check in and check out the parking space;
The said parking enforcement terminal comprises a PC parking enforcement terminal and an APP parking enforcement terminal with camera function;
The said PC parking enforcement terminal is used to present the planar graph of parking space state. The APP parking enforcement terminal is also used to present the planar graph of parking space state and provide navigation for the enforcement officer to achieve on-site evidence collection and enforcement.

The above-mentioned APP supervisor terminal, the APP driver terminal and the APP parking enforcement terminal all collect images/videos by use of camera integrated with the mobile terminal and obtain information for the vehicle license plate number based on image recognition.

In order to tackle the above-mentioned technical problems, we provide a parking space service and management method based on the parking space state information;
1.1. Publication of the parking space information, the supervisor or owner of the parking space publishes the parking space information on the cloud server by use of the supervisor terminal; The said parking space information includes at least the parking space code (geographic location), dimensions of the parking space, the available period and the limit for the parking duration;
1.2. Acquisition of the parking space reservation information, the driver uploads the parking space demand information to the cloud server by use of the driver terminal. The said parking space demand information includes at least the name of destination, the vehicle license plate number, the parking start time and the parking duration. The cloud server matches the parking space demand information as received with the parking space information. Feedback of the parking spaces successfully matched are provided to the driver by the driver terminal. The driver selects applicable parking space by the driver terminal and confirms the reservation. At this time, the cloud server provides feedback of the parking space reservation information to the supervisor terminal and the driver terminal respectively. The said parking space reservation information includes at least the parking space code, the vehicle license plate number, the parking start time and the parking duration;
1.3. Detection of the parking space state, with the vehicle entry or exit of the parking space, the state change of the parking space is detected by the vehicle detection module located in the parking space. The vehicle detection module transmits the parking space state to the supervisor terminal, the driver terminal and the cloud server respectively. The said parking space state information includes at least the parking space code, the parking space state and the time for the state change;
1.3.1. With the parking space been occupied as detected by the vehicle detection module, at this time the parking space state is the parking space occupied. The said cloud server generates three types of the parking space states, normal occupation, occupation without check-in and occupation without check-out, according to the parking space information, the parking space reservation information and the parking information. The said parking information includes at least the parking space code, the vehicle license plate number and the time for check-in of the parking space and the time for check-out of the parking space;
The said normal occupation means successful check-in of the parking space by the corresponding vehicle on the parking space and the parking time within the parking duration as checked-in;
The said occupation without check-in means no check-in of, failure to check in the parking space or extended standing after check-out of the parking space by the corresponding vehicle on the parking space; When the said vehicle have not checked in, or failed to check in the parking space, the vehicle license plate number is missing at occupation without check-in. For extended standing after check-out of the parking space, the vehicle license plate number is that of the corresponding vehicle;
The said occupation without check-out means an extended stay beyond the limit for the parking duration as successful checked-in by the corresponding vehicle;
1.3.2. With the parking space being vacant as detected by the vehicle detection module, at this time the parking space state is the parking space vacant; The said cloud server generates four types of the parking space states, the parking space available, the parking space reserved, the parking space vacant without check-out and the parking space faulted according to the parking space information, the parking space reservation information and the parking information;
The said parking space available means a corresponding parking space available for booking and parking;
The said parking space reserved means a corresponding parking space been reserved and for parking by the corresponding vehicle only;
The said parking space vacant without check-out means a parking space with the vehicle exited, without check-out of or failure to check out the parking space;
The said parking space faulted means a parking space unavailable caused by physical reasons, such as fault of the vehicle detection module, collapse of the parking space or non-vehicle occupation;
The said parking space state also includes specific state which includes the parking space unavailable. The parking space unavailable means a parking space not available for booking or parking;
1.4. All parking spaces in the car park are marked with different texts or graphic signs and colors, and presented on the electronic map module of the supervisor terminal, the driver terminal and the field terminal component, according to the parking space state obtained in steps 1.3.1 and 1.3.2; The drivers book, check in and check out the parking spaces, report faults or make complaints by use of the driver terminal. The supervisors make tour inspection of the parking space, collect evidence, manage or adjust the parking space state information by use of the supervisor terminal.

As improvement of the parking space service and management method based on parking space state information of this disclosure:
The detailed operation procedures for check-in of the parking space following the said step 1.3.1 are as follows:
With the vehicle entry of the parking space, the driver terminal receives the occupancy state information of the parking space transmitted by the vehicle detection module in the said step 1.3. The driver terminal extends a welcome message to the driver, displays the parking space code and requests the driver to check in the parking space. When the driver confirms to check in the parking space, the driver terminal transmits the check-in information to the cloud server, which receives and compares the information. At the time of successful comparison, the cloud server binds the vehicle license plate number and the parking space code, records the time for check-in of the parking space, and provides feedback of the information for successful check-in of the parking space to the supervisor terminal and the driver terminal. The check-in information includes at least the parking space code, the vehicle license plate number, the time for check-in of the parking space, the scheduled parking end time and the parking duration;
The detailed operation procedures for check-out of the parking space following the said step 1.3.2 are as follows:
   Prior to the vehicle exit of the parking space, the driver first checks out the parking space by use of the driver terminal. The driver terminal transmits the check-out information to the cloud server, which receives and compares the information; At the time of successful comparison, the cloud server unbinds the vehicle license plate number and the parking space code, records the time for check-out of the parking space, and transmits confirmation for check-out of the parking space to the supervisor terminal and the driver terminal; With the vehicle exit of the parking space, the change for the occupancy state information of the parking space is detected by the vehicle detection module and transmitted to the cloud server through the cloud communication module. The cloud server transmits to the supervisor terminal and the driver terminal the information for successful check-out of the parking space. The above-mentioned check-out information includes at least the parking space code, the vehicle license plate number, and the time for check-out of the parking space.

Further improvement of the parking space service and management system based on parking space state information of this disclosure:
The check-in of the parking spaces in the said step 1.2 is operated by use of the field terminal component, with detailed operation steps as follows:
A. Park-now, with the parking space state information presented on the said field terminal component, the driver transmits the parking duration and the vehicle license plate number to the field terminal component by use of the driver terminal, and selects an available parking space through the field terminal component to check in the parking space; The field terminal component transmits the check-in information to the cloud server, the supervisor terminal and the corresponding driver terminal respectively. After receiving the check-in information, the cloud server binds the corresponding vehicle license plate number and the parking space code, records the time for check-in of the parking space, provides feedback of the information for successful check-in of the parking space to the supervisor terminal and the driver terminal. The parking space state is presented consistent with the check-in information;
B. Reserved parking, with the parking space reservation information transmitted to the field terminal component through the driver terminal by the driver, the field terminal component compares the parking space reservation information with the current time. When they are consistent, the field terminal component transmits the information for check-in of the parking space to the cloud server, the supervisor terminal and the driver terminal respectively. The cloud server binds the corresponding vehicle license plate number and the parking space code, records the time for check-in of the parking space, provides feedback of the information for successful check-in of the parking space to the supervisor terminal and the driver terminal. The parking space state is presented consistent with the check-in information;

The check-out of the parking spaces in step 1.3.2 is operated by use of the field terminal component, with detailed operation steps as follows:
The driver transmits the check-out information to the field terminal component by use of the driver terminal. The field terminal component transmits to the cloud server, the supervisor terminal and the driver terminal respectively to confirm the information for check-out of the parking space. With the vehicle exit of the parking space, the change for occupancy state information of the parking space is detected by the vehicle detection module and transmitted to the cloud server through the cloud communication module. The cloud server transmits to the supervisor terminal and the driver terminal the information for successful check-out of the parking space. The cloud server unbinds the vehicle license plate number and the parking space code, records the time for check-out of the parking space, and provides feedback of the information for successful check-out of the parking space to the supervisor terminal. The parking space state is presented consistent with the information for successful check-out.

The said driver terminal transmits abnormal report and complaint through the field terminal component, such as the parking space faulted and abnormal occupation of the parking space;
The said supervisor terminal is used to manage the parking spaces on-site through the field terminal component and by tour inspection, such as the parking space unavailable and abnormal occupation of the parking space, and where necessary check in and check out the parking space on behalf of the drivers;
The said parking enforcement terminal is used to conduct field enforcement of the parking space through the field terminal component and by tour inspection, such as apply a ticket and enforce a violation.

Further improvement of the parking space service and management method based on parking space state information of this disclosure:
The said field terminal component comprises the parking space field terminal;
For the driver without the driver terminal, the parking method includes steps as follows:
   With the parking space state presented by the parking space field terminal, park the vehicle in the available parking space. Input the parking duration and the vehicle license plate number through the parking space field terminal to check in the parking space and make payment as required. The parking space state is presented consistent with the corresponding check-in information after successful check-in of the parking space; At the end of parking, first check out the parking space through the parking space field terminal, and then move the vehicle away from the corresponding parking space. The parking space state is presented consistent with fact of the parking space after successful check-out of the parking space;
   For supervisor by use of the parking space field terminal, the parking space management method includes steps as follows:
      Check the parking space abnormally occupied according to the parking space state presented on the parking space field terminal. Enter the vehicle license plate number and the abnormal fact through the parking space field terminal. Record and manage the abnormal;
      For parking enforcement officer by use of the parking space field terminal, the parking space management method includes steps as follows:
         Check the parking space abnormally occupied according to the parking space state presented on the parking space field terminal. Enter the vehicle license plate number and the abnormal fact through the parking space field terminal. Record and manage the abnormal.

Further improvement of the parking space service and management method based on parking space state information of this Invention:
The said field terminal component comprises the car park field terminal;
For the driver without the driver terminal, the parking method includes steps as follows:
   After the vehicle entry of the car park, the driver checks and selects the available parking space, parks the vehicle and records the parking space code, and then inputs the parking space code, the vehicle license plate number and the parking duration through the car park field terminal to check in the parking space and make payment as required. The parking space state is presented consistent with the check-in information after successful check-in of the parking space; At the end of parking, enter the parking space code in the car park field terminal to check out the parking space. The parking space state is presented consistent with fact of the parking space after successful check-out;
   For supervisor by use of the car park field terminal, the parking space management method includes steps as follows:
      Check the parking space abnormally occupied according to the parking space state presented on the car park field terminal. Enter the vehicle license plate number and the abnormal fact through the car parking field terminal. Record and manage the abnormal.

Further improvement of the parking space service and management method based on parking space state information of this disclosure:
The said specific state of the parking space state also includes the parking space specific for permit parking, the parking space for temporary parking, the parking space respondent, the rechargeable parking space and the parking space for automatic parking;
The said parking space specific for permit parking means a parking space accepted for booking and parking under conditions;
The said parking space for temporary parking means a parking space for park-now only. At the expire of the time as limited by the parking duration, the parking space must be checked out and the vehicle be removed away from the parking space (i.e., no extension accepted; the parking space for temporary parking may require a driver's presence and be limited by permit conditions);
The information of the parking space respondent will be shielded in a searching result and at booking. The parking space cannot be booked by the drivers and will miss the opportunity for booking and parking;
The said rechargeable parking space means a parking space installed with an EV power supply equipment (charging station) for charging battery pack of an electric vehicle and auxiliary power supply for an on-board electrical device;
The said parking space for automatic parking means a parking space with infrastructure for automatic parking for automatic or semi-automatic vehicle with assisted parking system or autonomous vehicle (applicable to use case without presence of a driver or driverless), or an automatic parking garage with designated pick-up/drop-off locations, where an ordinary vehicle can be automatically moved from the drop-off area to the parking space and automatically retrieved from the parking space to the pick-up area at the end of parking.

Further improvement of the parking space service and management method based on parking space state information of this disclosure:
Out of the parking space state information in the said step 1.3, the parking spaces of occupation without check-in, occupation without check-out, vacancy without check-out and the parking space faulted all mean abnormal states of the parking space. The cloud server provides feedback of the information for the above-mentioned, four types of the parking space state information of abnormal state to the supervisor through the supervisor terminal. The supervisor manages the corresponding parking space through navigation by use of the parking space code and the planar graph of parking space state of the electronic map module, adjusts the parking space state information consistent with the current parking space state, and transmits the processing results to the cloud server and the driver terminal, respectively;
The driver collects evidence for the abnormal state of the parking space by use of the driver terminal and reports to the supervisor terminal or makes complaints to the parking enforcement terminal with the evidence as collected;
The supervisor manages the parking spaces of the abnormal state by use of the supervisor terminal, adjusts the parking space state information consistent with the actual parking space state, collects evidence of abnormal parking space state, and reports to the parking enforcement terminal with evidence as collected;
The parking enforcement terminal is used to process the abnormal complaints, also collect evidence on site and process the abnormal. Finally, the processing results are transmitted to the cloud server, the corresponding supervisor terminal and the driver terminal respectively;
The information of the parking space respondent will be shielded in a searching result and at booking. The parking space cannot be booked by the drivers and will miss the opportunity for booking and parking;
The said vehicle respondent will be restricted at the time of booking and check-in of the parking space, neither to book the parking space nor to park now.

Compared with existing technologies, the technical advantages of the system described in this disclosure are as follows:
1. with the available parking space state information presented visually by the electronic map module integrated with the field terminal component, as well as the supervisor terminal and the driver terminal, this system helps to improve parking service and management as well as customer experience;
2. with real-time, complete and accurate parking space state information, this Invention meeting the parking service and management requirements for reserved parking, park-now and shared parking, to avoid misleading and mistaking occupancy; helping the drivers, the car park supervisors and the parking enforcement officers to find the abnormal state of the parking space at earliest convenience, strengthening reports, complaints, enforcement and supervision against illegal parking, and providing economic, efficient and legal means to govern illegal parking;
3. this system is compatible with parking requirements for customers with the driver terminal and without the driver terminal;
4. this system providing the rechargeable parking space information for electrical vehicles and the parking space information for automatic parking for vehicles with automatic assisted parking systems as well as autonomous vehicles, meeting the potential requirements for a transition from fuel vehicles to electric vehicles and the development of autonomous driving technology in the future 20 years.

### BRIEF DESCRIPTION OF THE DRAWINGS

The detailed implementation method is further described in combination with the attached figures as follows:
Figure 1 is a block diagram for model connection of the parking space service and management system based on parking space state information;
Figure 2 is a block diagram for the planar graph of parking space state for the electronic map module 7 in Figure 1.
   1. Cloud server; 2. Supervisor terminal; 3. Driver terminal; 4. Vehicle detection module; 5. Field terminal component; 6. Parking space enforcement terminal; 7. Electronic map module; 51. Parking space filed terminal; 52. Car park field terminal.

### DETAILED DESCRIPTION OF PREFERRED EMBODIMENTS

This system is further described in combination with the following embodiments, but the scope of protection is not limited to this.

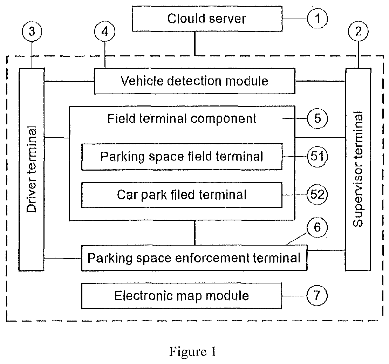

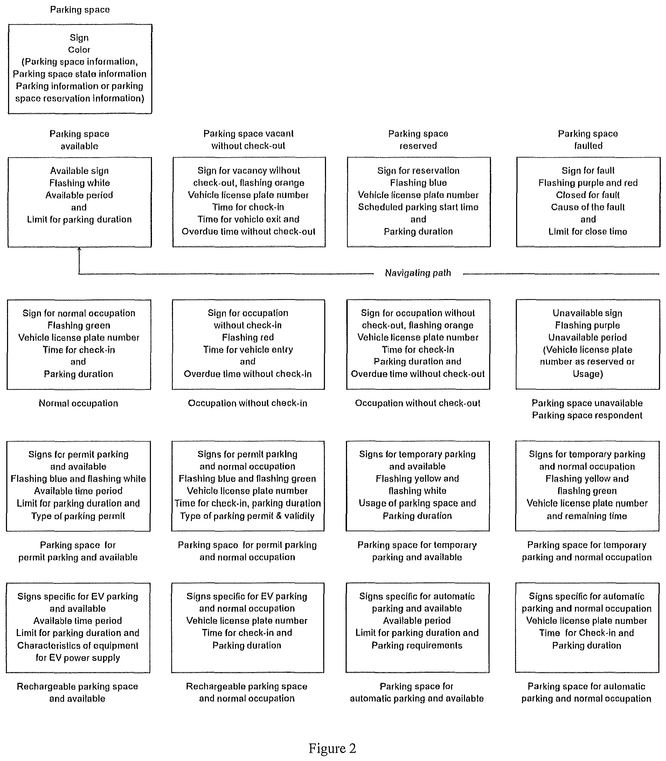

Embodiment 1, a parking space service and management system based on parking space state information, as shown in Figure 1 and Figure 2, includes a cloud server 1, as well as a supervisor terminal 2, a driver terminal 3, a vehicle detection module 4, a field terminal component 5, a parking enforcement terminal 6 and an electronic map module 7 connected by signal with the cloud server 1. The supervisor terminal 2 and the driver terminal 3 are connected by signal, and both the supervisor terminal 2 and the driver terminal 3 are connected by signal to the vehicle detection module 4, the field terminal component 5 and the parking enforcement terminal 6; Wherein the supervisor terminal 2 comprises an APP supervisor terminal and a PC supervisor terminal, the driver terminal 3 comprises an APP driver terminal and a PC driver terminal, the parking enforcement terminal 6 comprises an APP parking enforcement terminal and a PC parking enforcement terminal; The field terminal component 5 comprises a parking space field terminal 51 and a car park field terminal 52; The above-mentioned APP supervisor terminal, the PC supervisor terminal, the APP driver terminal, the PC driver terminal, the APP parking enforcement terminal, the PC parking enforcement terminal and the car park field terminal 52 are all integrated with the electronic map module 7 (in Figure 1, the connecting lines between the electronic map module 7 and other modules is omitted for clearance). The APP supervisor terminal, the APP driver terminal and the APP parking enforcement terminal are all integrated with camera function to collect images/videos by use of the camera on the mobile terminal, as well as to collect information for the vehicle license plate number based on image recognition.

The cloud server 1 is used to receive, store, process and update all the car park information, the vehicle information, the transaction information and the heartbeat message.

The car park information includes the parking space information and the parking space state information of the same car park; The parking space information includes at least the parking space code (geographical location), dimensions of the parking space, the available period and the limit for the parking duration, and may include the parking period or date for free or discounted parking, the type of the parking permit and its requirements, a charging policy, terms and conditions for use and provisions for penalty as applicable; The parking space state information is kept under the parking space code, including at least the parking space code, the parking space state and the time for the state change; Wherein the parking space state includes at least the parking space occupied or the parking space vacant; The parking space occupied includes normal occupation, occupation without check-in of the parking space, occupation without check-out of the parking space, and the parking space vacant includes the parking space available, the parking space reserved, the parking space vacant without check-out and the parking space faulted; Where applicable, the parking space state also includes states of the parking space unavailable, the parking space respondent, the parking space specific for permit parking, the parking space for temporary parking, the rechargeable parking space and the parking space for automatic parking. The parking space respondent means a parking space in a process of hearing for an abnormal complaint.

The vehicle information includes at least the vehicle license plate number, as well as the parking space demand information, the parking space reservation information, the parking information and the vehicle respondent kept under the vehicle license plate number; The parking space demand information includes at least a destination name, the vehicle license plate number, the scheduled parking start time and the parking duration; The parking space reservation information includes at least the parking space code as reserved, the vehicle license plate number, the scheduled parking start time and the parking duration; The parking information includes at least the vehicle license plate number and the parking space code, as well as the time for check-in and check-out of the parking space. The check-in of the parking space refers to a report or an action for the driver to express his parking intention, to accept terms and conditions of the parking service and management, and to confirm an initiation of parking. The check-out of the parking space refers to a report or an action for a driver to acknowledge a parking fact, to accept the terms and conditions of the parking service and the management, and to confirm a termination of parking. Wherein the vehicle respondent means a vehicle in a process of hearing for an abnormal complaint.

The transaction information includes at least the information for the parking space code, the vehicle license plate number, a date and time, a parking fee and a penalty.

The heartbeat message is used to realize monitoring and maintenance of the vehicle detection module 4, the parking space field terminal 51 and the car park field terminal 52 integrated with the parking space service and management system. As the contents of monitoring and maintenance of the above-mentioned hardware equipment may vary according to the operating environment, power supply means and fault characteristics of the equipment, taking the parking space vehicle detection module 4 as an example, the heartbeat message includes record for change of the abnormal state, clock, temperature and residual battery power. In this Instructions, only the relevant heartbeat message of the vehicle detection module 4 is described in detail. The heartbeat message of the vehicle detection module 4 includes at least the parking space code corresponding to the vehicle detection module 4 (i.e., device identification, which may also be a module code corresponding to the device), as well as the record for change of the abnormal state of the module, clock, temperature and residual battery power. Wherein, the record for change of the abnormal state includes at least the occupancy state of the parking space, the time for change of the occupancy state of the parking space, or no change of the occupancy state of the parking space within a prescribed period, and any record to which the cloud server 1 does not respond; The heartbeat message is transmitted to the cloud server 1 regularly. When the heartbeat message is abnormal, namely, the cloud server 1 hasn't received the heartbeat information within the prescribed period, the cloud server 1 will transmit a management order to the abnormal module for processing and updating. If the equipment is still presented as being abnormal, the cloud server 1 will transmit information of abnormal equipment to the supervisor terminal 2, to remind the supervisor of maintenance or replacement of the equipment; The above-mentioned management order includes clock correction or optimization of energy management scheme.
The electronic map module 7 is an electronic map integrated with the planar graph of parking space state; The electronic map module 7 is used to present geographic location and coordinates of the car park on the electronic map, including the geographical location and coordinates of each access with gate code for the entry and exit, and the planar graph of parking space state with the parking space code and information for points of interest; Where the car park has multiple underground or aboveground floors, additional information includes up and down ramps, elevators, escalators or stairs. Shift between different floors can be done freely by pressing of buttons. The electronic map in the electronic map module 7 can be zoomed freely by keyboard or gestures to show the geographical location and surrounding points of interest of the car park when zooming out, and the details of the planar graph of parking space state when zooming in, that is, the parking space code, the parking space information, the parking space state information and points of interest in the car park. The electronic maps of the above-mentioned APP supervisor terminal, the APP driver terminal and the APP parking enforcement terminal can also be used for navigation, including location and navigation path planning of the parking spaces, applicable for GPS navigation, indoor positioning and presentation for information of the available parking spaces, the abnormal parking spaces and points of interest. The cloud server 1 synchronizes all the parking space information and the parking space state information for each of the above parking spaces, as well as the parking space reservation information and the parking information of the corresponding parking space to the electric map module 7. The electric map module 7 presents the relevant information through corresponding terminals according to the actual demands of the users (the driver, the supervisor and the parking enforcement officer);
Both the PC supervisor terminal and the APP supervisor terminal are used to upload parking space information to the cloud server 1, monitor the abnormal states, accept abnormal complaints and inform the supervisor timely; The cloud server 1 synchronizes the parking space state information, the parking space reservation information and the transaction information corresponding to the parking space to the PC supervisor terminal and the APP supervisor terminal; The PC supervisor terminal and the APP supervisor terminal are also used to present the planar graph of parking space state and dynamic information for vehicle entry and exit of the car park. The dynamic information for vehicle entry and exit of the car park includes at least the gate code (if any), the parking space code, the vehicle license plate number, the scheduled parking start/end time, the actual parking start/end time, entry or exit, check-in or check-out of the parking space, type of amendment and time, reallocation of the parking space and the parking space state information corresponding to the parking space; The dynamic information of vehicle entry and exit takes time as master axis, with current information ahead of historical information, and abnormal information prior to normal information. The APP supervisor terminal is also used to book, check in, check out the parking space on behalf of customers and for payment, as well as accept, process abnormal reports and complaints from, and provide feedback to the drivers, collect evidence of violation vehicles (including to obtain information for the vehicle license plate number based on image recognition) and transmit it to the parking enforcement terminal 6 for accusation; The supervisor is presented the abnormal parking space information through the planar graph of parking space state in the electronic map module 7 on the APP supervisor terminal, and then navigates to the corresponding parking space through location and navigation. Where necessary, the supervisor may adjust the subsequent reservation for the parking space and inform the related driver, and adjust the parking space state consistent with the actual fact on site;
Both the PC driver terminal and the APP driver terminal are used to transmit the parking space demand information to the cloud server 1, for booking, payment, as well as check-in, check-out of the parking space, extension of the parking duration or cancellation of the reservation of the parking space; The cloud server 1 synchronizes the parking space demand information, the parking space reservation information, the entry and exit information, the parking information and the transaction information to the driver terminal 3 (the PC driver terminal and the APP driver terminal); The APP driver terminal is also used to realize park-now, real-time payment, check-in and check-out of the parking space; and in case of the parking space faulted or the parking violation, collect evidence by use of the APP driver terminal (including to obtain information for the vehicle license plate number based on image recognition) and report or accuse it to the supervisor terminal 2 or the parking enforcement terminal 6; The APP driver terminal is also used to present the planar graph of parking space state and conduct navigation. The driver checks the available parking spaces and books the parking space through the planar graph of parking space state of the electronic map module 7, and then navigates to the corresponding parking space through location and navigation.

The vehicle detection module (4) is located on the parking space, used to detect the parking space state and/or automatic recognition of the vehicle license plate number, and transmit the parking space state information to the cloud server 1, the supervisor terminal 2, the driver terminal 3 and the field terminal component 5. Where the vehicle detection module 4 is capable of automatic recognition of the vehicle license plate number, the parking space state information includes the vehicle license plate number; The vehicle detection module 4 comprises a vehicle detection sensor, a terminal communication module and the cloud communication module as successively connected; The vehicle detection sensor is used to detect the parking space state (the parking space occupied and the parking space vacant) and/or for automatic recognition of the vehicle license plate number (the vehicle detection sensor is a sensor similar to a camera to recognize the vehicle license plate number), and with the detection signal transmitted to the terminal communication module; The terminal communication module forwards the parking space state information to the cloud communication module, the APP supervisor terminal and the APP driver terminal; The cloud communication module receives and transmits this information to the cloud server 1 and the field terminal components 5. Wherein, when the information between the vehicle detection module 4 and the parking space field terminal 51 is directly processed through the cloud communication module, it can avoid hysteresis and loss of the information transmitted to the cloud server 1 and is helpful to improving the field service and management; The cloud communication module is also used to transmit the parking space code and the heartbeat message of the vehicle detection module 4 to the cloud server 1.

Both the parking space field terminal 51 and the car park field terminal 52 include a displayer, a communication module, a payment module and a human-machine interface. The communication module, the payment module and the human-machine interface are all connected to the displayer. The payment module is also connected to the communication module and the human-machine interface; The payment module includes a common payment interface of the existing technology or by QR code scanning, capable of quickly identifying the code of the device to perform mobile payment; The displayer presents the parking space state information, as well as the parking information, the reservation information, the parking space information or the abnormal information of the parking space corresponding to the parking space state information in texts, graphic and/or acousto-optic signals; The communication module is connected by signal to the cloud server 1, the APP supervisor terminal, the APP driver terminal and the APP parking enforcement terminal respectively; The cloud server 1 synchronizes the parking space information, the parking space state information, the parking information and the reservation information corresponding to all the parking spaces in the car park to the car park field terminal 52 (the parking space field terminal 51 and the car park field terminal 52 can also be integrated with Ethernet communication module connected by signal for high-speed transmission between the parking space field terminal 51 and the car park field terminal 52 in the same car park); The car park field terminal 52 is used to present the planar graph of parking space state and the parking space code, as well as the parking space state information corresponding to the parking space code, for driver to book the parking duration, make payment, as well as check in and check out the parking space. The cloud server 1 synchronizes the parking space state information of the corresponding parking space to the parking space field terminal 51; The parking space field terminal 51 presents the parking space state information of the corresponding parking space for driver to recognize the available parking space or the reserved parking space, book the parking duration and make payment as well as check in and check out the parking space. The communication module is also used to transmit the parking space state information as well as the heartbeat message of the parking space field terminal 51 to the cloud server 1.

In addition to such general information as the parking space code, dimensions of the parking space, prohibition for period and duration, price policy, permit conditions, terms and conditions for use and penalty rules, the displayer presents information specific to the above-mentioned parking space states, including:
In case of normal occupation, the vehicle license plate number, the time for check-in of the parking space and the parking duration, sign and color for normal occupation (such as flashing green) are presented;
In case of occupation without check-in, the time for entry of the vehicle, the overdue time for check-in of the parking space, sign and color for occupation without check-in (such as flashing red) are presented; At no check-in or failed to check-in of the said vehicle, the vehicle license plate number for occupation without check-in is missing. Extended stay after checked-out of the parking space, the vehicle license plate number corresponds to that of the vehicle;
In case of occupation without check-out, the vehicle license plate number, the time for check-in of the parking space and the limit for the parking duration, the overdue time for no check-out, sign and color for occupation without check-out (such as flashing orange) are presented;
In case of the parking space available, the available period and the limit for the parking duration of the parking space, as well as sign and color for the parking space available (such as flashing white) are presented;
In case of the parking space reserved, the vehicle license plate number, the scheduled parking start time and the parking duration, sign and color for the parking space reserved (such as flashing blue) are presented;
In case of the parking space vacant without check-out, the vehicle license plate number, the time for check-in of the parking space, the for exit of the vehicle, the overdue time without check-out, sign and color for the parking space vacant without check-out (such as flashing orange) are presented;
In case of the parking space faulted, fault shutdown, the fault reason and the duration limit for the shutdown, sign and color for the fault (such as flashing purple and flashing red) are presented;
In case of the parking space unavailable, the usage (such as road traffic, street cleaning and road-work), the unavailable periods, unavailable sign and color (such as flashing purple) are presented; The parking space respondent is processed as the parking space unavailable, the unavailable periods, unavailable sign and color (such as flashing purple) are presented.
In case of the parking space specific for permit parking, at the parking space available, the available period and the limit for the parking duration, the type of the parking permit, as well as composite sign and color (such as flashing blue and flashing white) for the parking space specific for permit parking and available are presented; and at the parking space normally occupied, the vehicle license plate number, the time and the limit for check-in of the parking space, the type of the parking permit, as well as the composite sign and color (such as flashing blue and flashing green) for the parking space specific for permit parking and at normal occupation are presented; The remaining states are processed, where applicable, as the above-mentioned parking space reserved, vacancy without check-out of the parking space, occupation without check-in of the parking space, occupation without check-out of the parking space and the parking space faulted, and additionally the code number and validity of the parking permit. When a shared parking space is reserved for its owner, that is, the parking space is for private use, the vehicle license plate number as reserved and the period for holding are presented without needing of the parking permit;
In case of the parking space for temporary parking, at the parking space available, the usage of the parking space, the parking duration as well as sign and color (flashing yellow and flashing white) for the parking space for temporary parking and available are presented. At the parking space normally occupied, the vehicle license plate number, the remaining time, sign and color (flashing yellow and flashing green) for the parking space for temporary parking and at normal occupation are presented; The remaining states are processed, where applicable, as above-mentioned vacancy without check-out, normal occupation, occupation without check-in of the parking space, occupation without check-out of the parking space and the parking space faulted;
In the case of the rechargeable parking space, significant physical sign for EV power supply equipment (charging station) is installed at the parking space on-site, and additionally special sign for electric vehicles is adopted in the planar graph of parking space state, for example, standardized acronym text or graphic of EV, an electric vehicle, a battery, a power plug or non-fuel vehicle etc. and even logo of a recognized representative brand of electric vehicles, for example, Tesla; Other signs and markings are the same as those for general parking spaces;
In case of the parking space for automatic parking, specific signs for automatic parking, including texts and graphics available for the drivers to recognize or codes of the infrastructure for automatic identification by the vehicles; The text or graphic symbol may include an Autonomous Vehicle (AV), a self-driving vehicle, an Automatic Valet Parking System (AVPS), an Automatic Parking Facility (APF) or an Automatic Vehicle Storage and Retrieval System (AVSRS), an Autonomous Vehicle (automatic driving vehicle) and a Driverless Vehicle (vehicle without a driver); The codes for automatic identification include the vehicle license plate number and vehicle location, the parking space code and the parking space location, requirements for communication between the vehicle and surrounding vehicles (V2V) as well as between the vehicle and the surrounding infrastructure (V2I), and requirements for on-board unit (OBU) and roadside equipment (RSE); The above autonomous vehicle, also known as driverless vehicle, computer-driven vehicle or wheeled mobile robot, is an intelligent vehicle that can drive itself manipulated by a computer system. Automatic assisted parking system is a kind of automatically supported parking system to park the vehicle in place without human control; Automatic parking facility is a parking garage with more than one parking space (usually multiple parking spaces over multiple storeys) and designated pick-up/drop-off locations, where an ordinary vehicle can be automatically moved from the drop-off area to the parking space and automatically retrieved from the parking space to the pick-up area at the end of parking; V2V refers to wireless communication in an intelligent transportation system that allows information to be exchanged between the vehicles, while V2I refers to wireless communication in an intelligent transportation system that allows information to be exchanged between the vehicle and the infrastructure; In case of the parking spaces for automatic parking, when required for the driver to recognize, other signs and markings are the same as those for general parking spaces; The parking spaces for automatic parking, specific for vehicles to identify (autonomous vehicles) or automatic garage to identify (Automatic Parking Facilities), other signs and markings are not required.

The flashing for the above color identification includes continuous illumination or illumination with different duty ratios. The specific flashing effect depends on the customer experience and energy management. For example, when the parking space field terminal 51 is powered by a battery or a solar panel, the longer shutoff and shorter power-on, with LED flashing effect are favorable for energy saving and identification. On contrary, for the planar graph of parking space state representation in the electronic map, master state surface filled with still bright colors, and the abnormal information of the parking space filled with longer still and shorter flashing are favorable for customer experience. For state with above-mentioned combined colors, two LEDs with different colors employed for the parking space field terminal 51 present better effect, while the planar graph of parking space state is more friendly with two different colors for surface fill and border.

The above-mentioned presentation of graphics or texts also includes fixed or permanent displays, including but are not limited to ground surface, curbstone and standing plate, such as text codes, graphic symbols and markings on surface of the parking space, color painting or light ribbon of curbstone, signs at front and rear ends of on-street parking spaces or, signs, signal lamps, or warning signs at the entrance and exit of the car park.

The parking enforcement terminal 6 is used to supervise illegal parking; The parking enforcement terminal 6 comprises the PC parking enforcement terminal and the APP parking enforcement terminal, to receive, store and process complaint information from the supervisor terminal 2 and the driver terminal 3, and enforce illegal vehicles after confirming the complaint information. The PC parking enforcement terminal presents the planar graph of parking space state, the APP parking enforcement terminal is also used to realize on-site evidence collection and enforcement; The enforcement officer checks the parking information of any parking space by use of the APP parking enforcement terminal, to collect evidence, keep record and dispose of the violation vehicles by comparing the parking information with the actual vehicle parking situation. In this Embodiment, the parking enforcement terminal 6 is connected with relevant supervisory departments, for example, the Traffic Police Department accepts the complaints against violation vehicles and supervise the above-mentioned illegal behaviors which infringe the interests of the owner of shared parking space and the car park by use of the parking enforcement terminal 6, so as to conduct corresponding enforcement; The APP parking enforcement terminal presents the planar graph of parking space state through electronic map module 7, and the parking enforcement officer checks the abnormal information of the parking space through the planar graph of parking space state, and then navigates to the corresponding parking space by location and navigation; The parking enforcement officer tracks also quickly the abnormal parking space through the abnormal information of the parking space presented by the parking space field terminal 51 or the car park field terminal 52, and then collect evidence (including to obtain information for the vehicle license plate number based on image recognition) and conduct on-site enforcement by use of the APP parking enforcement terminal.

The above-mentioned parking space service and management system and method, detailed procedures are as follows:
Note: Since the APP driver terminal and the PC driver terminal, the APP supervisor terminal and the PC supervisor terminal, and the APP parking enforcement terminal and the PC parking enforcement terminal have the same operating contents, only the operating contents of the APP driver terminal, the APP supervisor terminal and the APP parking enforcement terminal are detailed as follows for the parking space service and management system and method.

Making payment is the basic component for the transaction information in the parking space service and management system and method. According to tariff policy of the car park, the driver makes the payment when booking, checking in, checking out the parking space or exiting the car park. Payment modes include any reliable and mature payment means, such as bank card or electronic wallet, which are omitted or not omitted as required in the specific process description.
1. Publication of the parking space information, the car park supervisor or the parking space owner publishes the parking space information on cloud server 1 by use of the APP supervisor terminal. The parking space information includes at least the parking space code, dimensions of the parking space, the available period and the limit for the parking duration; Wherein the parking space code is unique, helpful for identification of the ownership of the car park and detailed location of the parking space; the dimensions of the parking space is used to match with the vehicle types; the available period is specified for the parking duration for reservation or park-now, which helps to supervise on-street parking and manage shared parking of the parking space for individual and organization at their convenience. The limit for the parking duration is specified for the maximum duration for parking to improve the circulation efficiency of the parking space;
   The parking space information may also include information for tariff policies, permit conditions, penalty rules as well as with or without EV power supply equipment of the parking spaces. Where the tariff policies include standard for period or duration for free parking, minute or hour rate, daily maximum rate, weekly rate or monthly rate etc.; The permit conditions include parking permits for the handicapped or disabled, residence, employee, priority, visitor, parent, express delivery, goods delivery/pick-up, passenger pick-up/drop-off, tailored car/taxi etc.; The penalty rules include occupation without check-in of the parking space, occupation without check-out of the parking space, vacancy without check-out of the parking space, and violation parking on an unavailable parking space (for example, occupy a shared parking space during the non-sharing period, i.e. parking beyond the available period) etc.;
   The parking permits for the disabled and priority etc. in the above-mentioned permit conditions reflect the care and the parking space guarantee for such special user groups as the disabled, the elderly, the weak, the sick, the pregnant and the young in the civilized society; The parking permits for residence, employee, visitor, parent etc. not only help to tackle the parking challenges under significant spatial and temporal imbalance between supply and demand for such groups, but also provide means for sharing services and internal management of the private car parks and parking spaces in residential community, industries and institutions, shopping malls, schools and hospitals etc.; For example, the parking permits for residence and employee are issued to ensure their normal parking demands for the private parking spaces of community residents and organizations, where the relevant parking spaces are specified for conditions of permit parking during private use or internal use; Different from common sense, these groups also need to book, check in and check out the parking spaces for use to provide accurately the parking space state information and develop good parking behaviors, so as to contribute these parking spaces to the service and management system for resource sharing;
   The parking spaces specific for express delivery, goods delivery/pick-up, passenger pick-up/drop-off, tailored car/taxi, etc. (i.e. the parking spaces specific for permit parking) and the parking spaces for temporary parking meet the essential demand for temporary pick-up or drop-off of passengers or goods, effectively reduce the time for unnecessary participation of road traffic by these vehicles, thus effectively relieving traffic pressure; Where applicable, the parking permit may be charged or be free of charge; While a charged parking permit simplifies the fee collection procedures of daily parking, a free parking permit is suitable for the parking space with normalized daily fee collection, free of charge or public commonweal, which is helpful for promotion of high efficient circulation of the parking spaces; The parking permit shall be specified for a validity, including validity for one time, today, this month or one month, this year or one year, etc.;
   If the supervisor (the car park supervisor or the parking space owner) is complained for any violation operation (such as cancellation of a reservation without rational), according to the severity and nature of, and rules against the violation, the relevant parking spaces once listed as respondents will be shielded from a searching result, resulting in missing opportunity of the parking spaces from being searched and booked by the driver.

With development of the energy crisis, exhaustion of oil resources as well as aggravation of hazards from air pollution and global warmup, the governments and automobile manufacturing industries in the world generally recognize that energy conservation and emission reduction are the main directions of future automobile technology development, and development of electric vehicles will be the best way to tackle related technical challenges. The information for rechargeable parking space is the basic guarantee to drive informatization of the parking space service and management and promote the development of automobile industry from fuel power to battery power.

The rechargeable parking spaces are specially required for parking of electric vehicles, and when no charging is needed, the electric vehicles may use the parking spaces without EV power supply equipment for parking, but fuel vehicles shall not occupy the rechargeable parking spaces. The information for the rechargeable parking spaces is of great significance to avoid misleading and mistaking occupation; At the same time, for different types of electric vehicles and charging requirements, charging modes, type of connections, type of power supply connectors, output characteristics, output voltage or current directly affect demand of the electric vehicles for the rechargeable parking spaces, and any information asymmetry between the electric vehicles and the EV power supply equipment will cause parking trouble; The information for rechargeable parking spaces includes also such helpful information for drivers to accurately search, save time and reduce costs as the charging time (such as ultra-fast charging, fast charging and slow charging), the applicable vehicle models and the tariffs, etc., so as to improve customer experiences. According to National Standard GB/T 18487.1-2015, charging modes for the electric vehicles include Mode 1, Mode 2, Mode 3 and Mode 4; type of connections between the electric vehicles and the EV power supply equipment include Case A, Case B and Case C; types of power supply connector include plug and socket; output characteristics include DC, AC or AC/DC; output voltages include AC voltage/frequency, DC voltage and current; With development of the electric vehicles, the requirements for EV power supply equipment for electric vehicles may be more detailed and professional, and the informatization of the parking space service and management, especially the integrity and accuracy of the parking space information for the electric vehicles, will seriously restrict the development and the customer parking experiences of the electric vehicles.

The autonomous vehicle has been an investment direction, magic weapon of future competition and commanding height of interests pursed by automobile industry giants. The direct benefit of the autonomous vehicle is that it can significantly lower costs of travel and infrastructure, reduce bump traffic accidents and mitigate degree of injury, thus reducing costs of insurance; The autonomous vehicles can significantly improve traffic efficiency, being more beneficial and convenient for travel of the children, the elderly, the disabled and the poor, relieve the driver from fatigue of driving and navigation, thus improving the travel experience of customers; The autonomous vehicles can also significantly reduce the fuel consumption and environmental pollution, lower parking demand and dimensions of the parking space, and promote the establishment and development of new traffic business models, such as carpooling.
While valet parking service provides customers with comfortable and convenient parking experiences, automatic parking garage not only provides all functions of traditional valet parking but also additional advantages as follows, for example, no need to search for the available parking space, to waste time and energy; no need to cross through corridors or the car park and no need to use stairs and elevators, convenient and fast, no need to search the parking place and access to save time; The key is kept at driver's own possession, much safer than traditional attended valet parking; The parking process is stable and safe without movement of the vehicle, and there are no moving vehicles and pedestrians around the garage; Neither fuel is consumed nor pollutant is generated during the parking process, where the size of the parking space is reduced to as big as that of a vehicle body to make full use of the parking resources;
The information for the parking spaces for automatic parking is the basic guarantee to drive informatization of the parking space service and management, promote development of the automobile industry from manual driving to computer assisted driving, semi-autonomous driving and fully autonomous driving.

The parking spaces for automatic parking are applicable for particular requirements for parking in the automatic parking garage, of the vehicles with assisted automatic parking system and the autonomous vehicles to tackle parking challenges and improve customer parking experience; As the parking precision is greatly improved and no need to consider exit from the vehicle at driver's convenience during parking, dimensions of the parking space as well as the clearance between the parking spaces may be far smaller than those required for ordinary vehicles, thus improving the efficiency of land or space use; In addition, the parking spaces for automatic parking are equipped with infrastructures meeting requirements for V2V and V21 wireless communication between on-board units, roadside equipment as well as other infrastructure, the basic information of these equipment and facilities, especially the communication type, affects the accurate requirements for autonomous vehicles on the parking spaces. With development of the automatic driving technique, the requirements of the autonomous vehicles for the parking spaces for automatic parking may be more detailed and professional, and the informatization of the parking space service and management, especially the integrity and accuracy of the information for the parking space for automatic parking, will seriously restrict the development and the customer parking experiences of the autonomous vehicles.

### 2. Booking of the parking space:

Book the parking in advance, book the parking space, the parking start time and the parking duration in advance;
The driver uploads the parking space demand information to the cloud server 1 by use of the APP driver terminal. The parking space demand information includes at least the name of destination, the vehicle license plate number, the scheduled parking start time and the parking duration; The cloud server 1 compares the parking space demand information as received with the parking space information, in particular including comparison between the name of destination and the parking space code (geographic location of the car park where the parking space is located), between the parking duration and the limit for the parking duration, and between the period of the scheduled parking start time plus the parking duration and the available period, etc.; The feedback of the parking spaces successfully matched are provided to the driver through the driver terminal 3; Successful matching means that the parking spaces are not reserved by others in the corresponding period, and that the parking start time and the parking duration in the parking space demand information meet the requirements for the parking space information of the available period and the limit for the parking duration;
The driver selects the applicable parking space and confirms the booking by use of the driver terminal 3, when the cloud server 1 provides feedback of the parking space reservation information to the APP supervisor terminal and the APP driver terminal, respectively; The parking space reservation information includes at least the parking space code, the vehicle license plate number, the parking start time and the parking duration; If any the vehicle to be booked has any violation in record and is reported by another driver or supervisor, the vehicle respondent may be blocked for booking the parking space according to the severity and nature of, and rules against the violation;
With the parking space not checked in or parked during the reserved parking period, the displayer of the parking space field terminal 51 at the reserved parking space is presented the parking space state being the parking space reserved, i.e., at least the vehicle license plate number of the vehicle as reserved, the scheduled parking start time and the parking duration, and sign and color (flashing blue) of the parking space reserved are presented; The car park field terminal 52 is located at the pedestrian flow distribution area in the car park, such as lobbies for stairs and elevators. In the planar graph of parking space state presented on the displayer of the car park field terminal 52, sign and color (flashing blue) of the above-mentioned reserved parking space are presented, and the supervisor of the car park may check the parking space reservation information, at least including the vehicle license plate number of the vehicle as reserved, the scheduled parking start time and the parking duration;
The parking space state information for all the parking spaces vacant and reserved is presented as the parking spaces reserved during the vacant period before entry of the vehicle as reserved, and such vacant period is specified, as applicable, up to the maximum limit for the parking duration of this parking space. For example, the limit for the parking duration is 120 minutes, and the driver is scheduled to start parking at 12:00 today, then the parking space will be presented as reserved parking space from 10:00. If another driver plans to use the parking space at 10:00 on the same day, and the estimated parking ends before 12:00, during which there is no booking for the parking space, then this driver can still book or check in the parking space. At this time, the parking space state is presented consistent with the actual state. Once there is no booking and with the parking space available, sign of the parking space available as well as the available duration are presented with the parking space field terminal 51 and the car park field terminal 52; For convenience of identification and efficient use of vacant period, the sign and way of presentation may be different with difference of the available duration, for example, the longer the on-duty of the flashing, the more the available duration, and the shorter the on-duty of the flashing, the less the available time.

### 3. The vehicle entry of the parking space:

The information for change of the parking space state as detected by the vehicle detection sensor in vehicle detection module 4 on the parking space is transmitted to the terminal communication module; The terminal communication module forwards the occupancy state information of the parking space respectively to the APP supervisor terminal, the APP driver terminal and the cloud communication module, and the cloud communication module receives and transmits it to the cloud server 1; Wherein the occupancy state information of the parking space includes at least the parking space code, the parking space occupancy state and the time for change of the parking space occupancy state; Where the vehicle detection sensor is a camera or other detection device capable of automatic recognition of the vehicle license plate number, the information for the parking space occupancy state also includes the vehicle license plate number; With the parking space state changing from the parking space reserved/available to the parking space occupation without check-in, at least the vehicle entry time, the overdue time without check-in, and sign and color (flashing red) of the parking space occupation without check-in are presented with the parking space field terminal 51; In the planar graph of parking space state on the displayer of the car park field terminal 52, sign and color (flashing red) of the parking space occupation without check-in are presented for the above-mentioned entry of the parking space, and once the supervisor of the car park checks the parking space, the presented information includes at least the vehicle entry time, the overdue time without check-in, and sign and color (flashing red) of the parking space occupation without check-in;
Note:
With the parking space state being the parking space occupied by the vehicle as detected by the vehicle detection sensor in the vehicle detection module 4, the cloud server 1 generates three types of states, normal occupation, occupation without check-in of the parking space and occupation without check-out of the parking space according to the parking space information, the parking space reservation information and the parking information;
Normal occupation means successful check-in of the parking space by the corresponding vehicle on the parking space and the parking time within the parking duration as reserved;
The occupation without check-in of the parking space means no check-in of, failure to check in the parking space or extended standing after check-out of the parking space by the corresponding vehicle on the parking space;
The occupation without check-out means an extended stay beyond the time estimated for check-out (the parking duration as reserved) with successful check-in by the corresponding vehicle;
With the parking space state being the parking space vacant without the vehicle as detected by the vehicle detection sensor in the vehicle detection module 4, the cloud server 1 generates four types of states, the parking space available, the parking space reserved, the parking space vacant without check-out of the parking space and the parking space faulted according to the parking space information, the parking space reservation information and the parking information;
The parking space available means a corresponding parking space available for booking and parking;
The parking space reserved means a corresponding parking space been reserved and for parking by the corresponding vehicle only;
The parking space vacant without check-out means a parking space with the vehicle exited, without check-out of or failure to check out the parking space;
The parking space faulted means a parking space unavailable caused by physical reasons, such as fault of the vehicle detection module 4, collapse of the parking space or non-vehicle occupation etc.;
The parking space state also includes 6 types of specific states, i.e. the parking space unavailable, the parking space respondent, the parking space specific for permit parking, the parking space for temporary parking, the rechargeable parking space and the parking space for automatic parking;
The parking space unavailable means a parking space of no rental, for example, on-street parking spaces during rush hours are not used for booking or parking; At this time the parking space is not restricted by the system rules, no matter whether the parking space occupied or the parking space vacant, neither available for booking nor used for parking, nor required for check-in of or check-out of the parking space; In order to protect the privacy of the car park or the owner of the parking space, the parking space respondent is managed as the unavailable parking space;
Parking space sharing includes two basic use-cases, the first being the sharing of the parking space and road, for example, the above-mentioned on-street parking spaces are restored to road functions instead of the parking space during rush hours; the second being the sharing of the parking space for private use and rental, for example, the private parking space is for private use at night while shared as rental during the daytime; The basic feature of the above-mentioned two types of the parking space sharing is time-sharing, that is, the parking spaces are shared in part time and are restored for road function or reserved for private-use in part time. The parking space unavailable means the parking space restored to road functions, wherein it is a particular use-case of the parking space for permit parking during period of the parking space in a reserved period. This system realizes time-sharing by control of the period for the parking spaces.

The parking space specific for permit parking means that the parking space accepts booking or parking under conditions; Permit conditions include parking permits for the handicapped or disabled, residence, employee, priority, visitor, parent, express delivery, goods delivery/pick-up, passenger pick-up/drop-off, tailored car/taxi etc.; The parking space for permit parking helps to guarantee the rights and interests of the licensee, so that only the driver with a valid permit can use the parking space designated for permit parking. In addition to the private owned car park and the private parking space are required for permit parking, the public parking spaces around residential community used with resident permit, the public parking spaces in business area used with employee permit, and the parking spaces at the access of primary schools used with parent permit only are also helpful to meet the parking demand of these groups; The particular use-case of the above-mentioned parking space for permit parking is when the parking space is reserved for the owner of the parking space, i.e., the parking space for private use, the parking permit is not required but the vehicle license plate number as reserved, as well as the period reserved directly presented, only the vehicle corresponding to the vehicle license plate number is allowed to park.

With resident permit and employee permit, the parking space sharing and parking challenges of the residential community and organization can be managed easily. Their common characteristics are the waste of the parking space resources and the parking challenges caused by temporal imbalance between supply and demand, wherein the characteristics of the residential community present serious shortage in the parking space at night while surplus during the day, and those of the organization present surplus at night while serious shortage in the parking space during the day; Therefore it is specified whether private parking spaces of the residential community or organization, or public parking spaces around for use with parking permits; Wherein the private parking spaces of the residential community and the public parking spaces around are specified for booking with resident permit for period of the night (e.g., 6:00p.m.~7:00a.m.), and resident permit for the parking spaces is licensed only to the residents of the residential community; While the private parking spaces of the organization and the public parking spaces around are specified for booking with employee permit for period of the day (e.g., 7:30a.m.∼5:30p.m.), and employee permit for the parking spaces is licensed only to the employees of the organization;
Without prejudice, the above resident or employee, or other drivers using the parking spaces need to book, check in and check out the parking spaces for parking; however, general drivers using the parking spaces can hardly book the parking spaces with periodic parking challenges without being qualified the parking permit, so as to guarantee the parking needs for the residents in residential community with "resident permit" and for the employees of the organization with "employee permit"; During a period not restricted for the parking permit, these "waste" parking space resources are shared and utilized by more drivers whether during the daytime in residential community or during the night in organization;
The above-mentioned parking spaces limited for permit parking, not only helps to tackle the parking challenges under significant spatial and temporal imbalance situation between supply and demand for these groups, but also these private-owned and private-used parking spaces are combined with the sharing service and management system of resources, providing sharing service and internal management means for private-owned and private-used parking spaces in residential community, industries and institutions, shopping malls, schools, hospitals, etc.; Since these groups also need to book, check in and check out the parking spaces for private use or internal use, the parking space information is more comprehensive and the parking space state information is more accurate, which helps the drivers to develop good parking behaviors.

The parking spaces for temporary parking means the parking spaces not accepted for booking; The parking is allowed only if the purpose of use as specified and successfully check-in of the parking space, and check-out of and removal of the vehicle from the parking space by the duration limit. These parking spaces include, but are not limited to, logistics loading and unloading zones, temporary stands for taxis, tailored cars or shuttle buses, and emergency stops at the access of hospitals and roadside public toilets.

The installation and use of the parking spaces for temporary parking meet the actual demand for short-term use of the parking spaces, and effectively reduce the time for unnecessary participation of road traffic by these vehicles, thus effectively relieving traffic pressure, reducing resource consumption and environmental pollution; Where applicable, the parking spaces for temporary parking are combined with the specific state of the parking space for permit parking. That is, a parking permit is required for use with the parking space for temporary parking, for example, only the vehicles for delivery or pick-up of goods for these entities are allowed to park temporarily at the logistics loading and unloading zones of a hotel or shopping mall; The driver may also be required to be present on-site of the parking spaces, such as for a taxi. For the latter requirements, the vehicle detection module 4 with camera function may be installed near the parking space, so as to monitor whether the driver has left on-site of the parking spaces, while obtaining the parking space state information.

The rechargeable parking space means the parking space equipped with EV power supply equipment (charging station) for battery pack of the electric vehicle and auxiliary power supply for the on-board electrical device. The information for the rechargeable parking space includes at least the characteristics of the EV power supply equipment; According to National Standard GB/T 18487.1-2015, the characteristics of the EV power supply equipment include charging modes (Mode 1, Mode 2, Mode 3 and Mode 4), types of the connection (Case A, Case B and Case C), types of power supply connector (plug and socket), output characteristics (DC, AC or AC/DC), output voltage and current (AC voltage/frequency, DC voltage and current); The information for the rechargeable parking space includes also the charging time (such as ultra-fast charging, fast charging and slow charging), the applicable vehicle models and the tariffs. The rechargeable parking space has the parking space information identical to that without the EV power supply equipment, in addition to the EV power supply equipment.

The parking space for automatic parking means the parking space equipped with infrastructures applicable for vehicles with automatic or semi-automatic assisted parking system or automatic driving system, capable of automatic parking with the driver out of the vehicle or without a driver. The parking spaces for automatic parking include also automatic parking garage where the vehicle is automatically moved to and retrieved from the parking space; The parking space information for the parking space for automatic parking includes at least graphic or text sign for identification by the driver and, requirements for on-board equipment (OBU), specifications for roadside equipment (RSE) as well as safe and reliable communication types and requirements for identification by the vehicles automatically and meeting standards for communication between vehicle-to-vehicle (V2V) and vehicle-to-infrastructure (V2I); Generally, the precision of automatic parking is higher than that of driver parking, and without needing to consider extra parking space for the driver's exit of the vehicle after parking, it is possible to lower the space demand of the parking space for automatic parking than that for non-automatic parking; The parking space for automatic parking is not required for other signs and markings, in addition to the graphic and text symbols for identification by the driver.

The thirteen types of the parking space states in this Invention are used to describe and limit the actual state of the parking space individually or in combination as applicable, so that the parking spaces are more in line with the actual requirements. For example, the combination of the parking space for temporary parking respectively with the parking space available, with normal occupation and specific for permit parking (even three types of state for the parking spaces for temporary parking, the parking space available and the parking space specific for permit parking) enables the users to obtain detailed restriction information for the parking space (i.e., for temporary parking and with a parking permit) and actual state (i.e., the parking space available), so that the users can immediately find the parking space that best fits the parking demand.
3.1. The procedures for a driver who has booked a parking to check in the parking space;
3.1.1. The procedure for a driver to check in the parking space directly by use of the APP driver terminal;
With the vehicle entry of the parking space, the APP driver terminal receives the occupancy state information of the parking space transmitted by the terminal communication module in the vehicle detection module 4. The driver terminal extends a welcome message to the driver, displays the parking space code and requests the driver to check in the parking space. When the driver confirms the parking space code and parking, and check in the parking space, the APP driver terminal transmits the check-in information to the cloud server 1, which receives and compares the information. At the time of successful comparison, the cloud server 1 binds the vehicle license plate number and the parking space code, and provides feedback of the information for successful check-in of the parking space to the APP supervisor terminal and the APP driver terminal, when the parking space state is presented consistent with the check-in information, i.e., the parking space state changed from occupation without check-in of the parking space to normal occupation, and the information is presented the same as actual. The above-mentioned check-in information includes at least the parking space code, the vehicle license plate number, the time for check-in of the parking space, the parking duration and the estimated parking end time, wherein the estimated parking end time is the scheduled parking start time plus the parking duration from the parking space reservation information;

With poor mobile communication signal in the car park and check-in of the parking space impossible on site directly by use of the APP driver terminal, the driver can check in the parking space where allowed by signal before the vehicle's entry of the parking space, and then move the vehicle into the parking space or; the driver may first move the vehicle into the parking space, and then check in the parking space where allowed by signal and within a specified time.
3.1.2. With poor mobile communication signal in the car park and check-in of the parking space impossible directly by use of APP driver terminal, the driver checks in the parking space through the parking space field terminal 51 by use of the APP driver terminal;

The driver transmits the check-in information to the parking space field terminal 51 by use of the APP driver terminal; The parking space field terminal 51 compares the check-in information with the current parking space state information, and at the time of successful comparison, the parking space field terminal 51 transmits the information for check-in of the parking space respectively to cloud server 1, the APP supervisor terminal and the APP driver terminal; After receiving this information, the cloud server 1 binds the vehicle license plate number and the parking space code, changes the parking space state information consistent with the actual state, and provides feedback of the information for successful check-in of the parking space to the APP supervisor terminal and the APP driver terminal.
3.1.3. With poor mobile communication signal in the car park and check-in of the parking space impossible directly by use of the APP driver terminal, the driver checks in the parking space through the car park field terminal 52 by use of the APP driver terminal;

The driver transmits the check-in information to the car park field terminal 52 by use of the APP driver terminal; The car park field terminal 52 compares the check-in information with the current parking space state information for the designated parking space, and at the time of successful comparison, the car park field terminal 52 transmits the information for check-in of the parking space respectively to cloud server 1, the APP supervisor terminal and the APP driver terminal; After receiving this information, the cloud server 1 binds the vehicle license plate number and the parking space code, changes the parking space state information consistent with the actual state, and provides feedback of the information for successful check-in of the parking space to the APP supervisor terminal and the APP driver terminal.
3.1.4. Check-in of the parking space without the APP driver terminal, user without the APP driver terminal makes reservation by use of the PC driver terminal in advance and then needs to check in the parking space;
3.1.4.1. The procedures for the driver to check in the parking space through the parking space field terminal 51;
The driver inputs manually the vehicle license plate number through the parking space field terminal 51, and the parking space field terminal 51 checks the parking space reservation information corresponding to the vehicle license plate number, and compares the parking space reservation information with the current parking space state information; At the time of successful comparison, the parking space field terminal 51 transmits the information for check-in of the parking space to the cloud server 1 and the APP supervisor terminal respectively; After receiving this information, the cloud server 1 binds the vehicle license plate number and the parking space code, changes the parking space state information consistent with the actual state, and provides feedback of the information for successful check-in of the parking space to the APP supervisor terminal;
3.1.4.2. The procedures for the driver to check in the parking space through the car park field terminal 52;
The driver inputs manually the vehicle license plate number through the car park field terminal 52, and the car park field terminal 52 checks the parking space reservation information corresponding to the vehicle license plate number, and compares the parking space reservation information with the current parking space state information; At the time of successful comparison, the car park field terminal 52 transmits the information for check-in of the parking space to the cloud server 1 and the APP supervisor terminal respectively; After receiving this information, the cloud server 1 binds the vehicle license plate number and the parking space code, changes the parking space state information consistent with the actual state, and provides feedback of information for successful check-in of the parking space to the APP supervisor terminal;

With the vehicle successfully check-in of the parking space and within the parking duration as reserved, the parking space state of normal occupation is presented in the displayer of the parking space field terminal 51 where the vehicle is parked, that is, at least the vehicle license plate number, the time and the duration for check-in of the parking space, sign and color (e.g., flashing green) of normal occupation are presented; The sign and color (e.g., flashing green) of normal occupation are also presented for the corresponding parking space in the planar graph of parking space state on the displayer of the car park field terminal 52 where the vehicle is parked, and the supervisor of the car park further checks the other information of this parking space, at least including the vehicle license plate number, the time and the duration for check-in of the parking space.

3.2. Park-now on site, select the available parking space, book the parking duration and check in the parking space on site;
For park-now, the scheduled parking end time of the check-in information is the time for check-in of the parking space plus the parking duration.

3.2.1. Book the parking duration and check in the parking space on site by use of the APP driver terminal;
As shown in Figure 2, the driver checks the available parking space information in the corresponding car park through the planar graph of parking space state in electronic map module 7 in the APP driver terminal; the planar graph of parking space state presents floors and layout of the parking spaces in the car park, and represents the parking space state information for each of the parking space using color and marking, wherein the available parking space also includes the available time for the parking space; The driver selects the applicable available parking space and then confirms the parking space code and booking of the parking duration by inputting destination for the point of interest and navigation path plan; As shown by the arrow in Figure 2, the driver navigates to the parking space site by navigation and path plan of the electronic map module 7, and checks in the parking space by use of the APP driver terminal after entry of the parking space. At this time, the APP driver terminal transmits the check-in information to the cloud server 1 through mobile communication network; The cloud server 1 binds the vehicle license plate number and the parking space code, and provides the information for successful check-in of the parking space to the APP supervisor terminal and the APP driver terminal, and changes the parking space state information consistent with the actual state, that is, the parking state changed to normal occupation, marking and color (e.g. flashing green) presented for normal occupation;
With poor mobile communication signal in the car park and the check-in of the parking space on site impossible directly by use of the APP driver terminal, the driver checks in the parking space where allowed by the signal before the vehicle's entry of the parking space, and then moves the vehicle into the parking space within the time limit or, the driver first moves the vehicle into the parking space, and then checks in the parking space where allowed by the signal and within the time limit;
3.2.2. User without the APP driver terminal books the parking duration and checks in the parking space on site through the field terminal component 51;
The parking space state information of the parking space is presented on the displayer of the parking space field terminal 51, and the driver selects applicable parking space for parking only by viewing the available parking space information and the available time (e.g., pilot light of LED flashing white, color of white means the parking space available, and the flashing duty ratio means the available time) presented on the displayer without needing to get off the vehicle; After the vehicle's entry of the parking space, the driver exits the vehicle and carefully checks the available time within the expected range on the displayer of the parking space field terminal 51, e.g., the available time of 200 minutes, and then manually inputs the parking duration (e.g., 120 minutes) and the vehicle license plate number for reservation with the human-machine interface; The driver continues to complete check-in of the parking space with the human-machine interface, and then the check-in information is transmitted respectively to the cloud server 1 and the APP supervisor terminal through the communication interface of the parking space field terminal 51; The cloud server 1 binds the vehicle license plate number and the parking space code, changes the parking space state information consistent with the actual state, i.e., the parking space state changed to normal occupation, marking and color (e.g. flashing green) presented for normal occupation, and provides feedback of the information for successful check-in of the parking space to the APP supervisor terminal;
3.2.3. User without the APP driver terminal books the parking duration and checks in the parking space on site through the car park field terminal 52;
Park the vehicle before check-in of the parking space, with vehicle's entry of the car park, the driver selects applicable available parking space for parking and keeps a record of the parking space code; The driver proceeds to the car park field terminal 52 nearby, searches from the displayer according to the parking space code and the floor or inputs directly the parking space code where the vehicle is parked, and then the driver inputs manually the parking duration and the vehicle license plate number for reservation with the human-machine interface; The driver continues to complete check-in of the parking space with the human-machine interface, and then the check-in information is respectively transmitted to the cloud server 1 and the APP supervisor terminal through the communication interface of the car park field terminal 52; The cloud server 1 binds the vehicle license plate number and the parking space code, changes the parking space state information consistent with the actual state, i.e., the parking space state changed to normal occupation, marking and color (e.g., flashing green) presented for normal occupation, and provides feedback of the information for successful check-in of the parking space to the APP supervisor terminal. If the car park field terminal 52 reminds the drivers of a failure to check-in of the parking space, meaning incompliance of the vehicle with the parking conditions of this parking space (for example, the parking space unavailable, the parking space specific for permit parking, the parking space reserved or the parking duration exceeding the limit for the parking duration (or its available period)), then the car park field terminal 52 reminds the driver of booking another available parking space and to remove the vehicle;

Check in the parking space before parking of the vehicle, the driver first proceeds to the car park field terminal 52 nearby, and the parking space state information of all the parking spaces is presented on the displayer; To the extent of his convenience and the expected parking duration, the driver selects the available parking space close to the destination for point of interest, and inputs manually the parking duration and the vehicle license plate number for reservation through the human-machine interface of the car park field terminal 52; The driver continues to complete check-in of the parking space through the human-machine interface, and then the check-in information is respectively transmitted to the cloud server 1 and the APP supervisor terminal through the communication interface of the car park field terminal 52; After receiving this information, the cloud server 1 binds the vehicle license plate number and the parking space code, changes the parking space state information consistent with the actual state, i.e., the parking space state changed to normal occupation, marking and color (e.g., flashing green) presented for normal occupation, and provides feedback of the information for successful check-in of the parking space to the APP supervisor terminal. The driver keeps record of the parking space code as reserved, and moves the vehicle into the parking space with successful check-in of the parking space within the specified time.

4. Vehicle's exit from the parking space, the parking space state is changed from being occupied to vacant state as detected by the vehicle detection sensor of the vehicle detection module 4;
4.1. The procedures for check-out of the parking space by use of the APP driver terminal;
4.1.1. The procedures for check-out of the parking space directly by driver using of the APP driver terminal;
With driver's confirmation for termination of the parking and check-out of the parking space by use of the APP driver terminal, the check-out information is transmitted to the cloud server 1 by use of the APP driver terminal. The check-out information includes at least the parking space code, the vehicle license plate number and the time for check-out of the parking space.
The cloud server 1 receives the check-out information and checks the corresponding check-in information for comparison according to the vehicle license plate number; At the time of successful comparison, the information is transmitted to the APP supervisor terminal and the APP driver terminal to confirm the information for check-out of the parking space. With the vehicle's exit from the parking space, the parking space state changes as detected by the vehicle detection sensor of the vehicle detection module 4 on the parking space; the vehicle detection sensor transmits the information to terminal communication module; the terminal communication module forwards the information for successful check-out of the parking space respectively to the APP supervisor terminal, the APP driver terminal and the cloud communication module; the cloud communication module receives and transmits the information to the cloud server 1; At this time, the cloud server 1 unbinds the vehicle license plate number and the parking space code, and changes the parking space state information consistent with the actual state;
With poor mobile communication signal in the car park and the check-in of the parking space impossible on site directly by use of the APP driver terminal, the driver first checks out the parking space where allowed by signal before the vehicle's exit from the parking space, and then moves the vehicle away from the parking space within the specified time or; the driver first moves the vehicle away from the parking space, and then checks out the parking space where allowed by signal and within the specified time;
4.1.2 With poor mobile communication signal in the car park and the check-out of the parking space impossible directly by use of the APP driver terminal, the driver checks out the parking space at the parking space field terminal 51 by use of the APP driver terminal;
The driver transmits the check-out information to the parking space field terminal 51 by use of the APP driver terminal; the parking space field terminal 51 checks the corresponding check-in information and compares the scheduled parking end time in the check-in information with the time for check-out of the parking space, and after successful comparison, the parking space field terminal 51 transmits this information respectively to the cloud server 1, the APP supervisor terminal and the APP driver terminal through the communication interface to confirm the information for check-out of the parking space; After the vehicle's exit from the parking space, the parking space state changes as detected by the vehicle detection sensor in the vehicle detection module 4 on the parking space; the vehicle detection sensor transmits the information to the communication interface of the parking space field terminal 51; the parking space field terminal 51 transmits the information for successful check-out of the parking space respectively to the cloud server 1, the APP supervisor terminal and the APP driver terminal through the communication interface, and the cloud server 1 receives this information and unbinds the vehicle license plate number and the parking space code, and changes the parking space state information consistent with the actual state;
4.1.3. With poor mobile communication signal in the car park and the check-out of the parking space impossible directly by use of the APP driver terminal, the driver checks out the parking space at the car park field terminal 52 by use of the APP driver terminal;

The driver transmits the check-out information to the car park field terminal 52 by use of the APP driver terminal; the car park field terminal 52 checks the corresponding check-in information and compares the scheduled parking end time of the check-in information with the time for check-out of the parking space, and after successful comparison, the car park field terminal 52 transmits this information respectively to the cloud server 1, the APP supervisor terminal and the APP driver terminal through the communication interface to confirm check-out of the parking space; After the vehicle's exit from the parking space, the parking space state changes as detected by the vehicle detection sensor of the vehicle detection module 4 on the parking space; The vehicle detection sensor transmits the information to the communication interface of the parking space field terminal 52; the parking space field terminal 52 transmits the information for successful check-out of the parking space respectively to the cloud server 1, the APP supervisor terminal and the APP driver terminal through the communication interface, and the cloud server 1 receives the information and unbinds the vehicle license plate number and the parking space code, and changes the parking space state information consistent with the actual state.

4.2. The procedures for check-out of the parking space without the APP driver terminal;
4.2.1. The procedures for check-out of the parking space through the parking space field terminal 51 by the user without the APP driver terminal;
The driver returns to the parking space site using the parking space code at check-in of the parking space, and inputs manually the vehicle license plate number through the human-machine interface of the parking space field terminal 51; The parking space field terminal 51 checks the corresponding check-in information and compares the scheduled parking end time of the check-in information with the current time, and after successful comparison, the parking space field terminal 51 transmits the information respectively to the cloud server 1 and the APP supervisor terminal to confirm check-out of the parking space; After the vehicle's exit from the parking space, the parking space state changes as detected by the vehicle detection sensor of the vehicle detection module 4 on the parking space; the vehicle detection sensor transmits this information to the communication interface of the parking space field terminal 51; The parking space field terminal 51 transmits the information for successful check-out of the parking space respectively to the cloud server 1, the APP supervisor terminal and the APP driver terminal through the communication interface, and the cloud server 1 receives the information and unbinds the vehicle license plate number and the parking space code, and changes the parking space state information consistent with the actual state;
4.2.2. The procedures for check-out of the parking space through the car park field terminal 52 by the user without the APP driver terminal;
The driver inputs manually the vehicle license plate number through the human-machine interface of the car park field terminal 52, and the car park field terminal 52 checks the check-in information corresponding to the vehicle license plate number and compares the scheduled parking end time of the check-in information with the time for check-out of the parking space, and after successful comparison, the car park field terminal 52 transmits the information respectively to the cloud server 1 and the APP supervisor terminal through the communication interface to confirm check-out of the parking space; After the vehicle's exit from the parking space, the parking space state changes as detected by the vehicle detection sensor of the vehicle detection module 4 on the parking space; The vehicle detection sensor transmits the information to the cloud server 1, and after receiving the information, the cloud server 1 transmits the information for successful check-out of the parking space respectively to the APP supervisor terminal and the APP driver terminal, unbinds the vehicle license plate number and the parking space code, and changes the parking space state information consistent with the actual state.

Note: For the vehicles with automatic/semi-automatic assisted parking system or automatic driving system, or the automatic parking garage where the vehicles are automatically moved to and retrieved from the parking spaces, with the vehicle's entry of the parking space for automatic parking, the check-in and check-out of the parking space for the vehicle is automatically achieved with the vehicle's entry of and exit from (removal from) the parking space, that is, the check-in and check-out of the parking space are automatically implemented during the automatic parking process.
5. The most unfavorable normal use, reasonably foreseeable misuse and single fault conditions;
The most unfavorable normal use, i.e., the conditions the system is used or operated according to specified procedures or for obviously expected purpose, with the affection on the detection of the vehicles and the communication distance considered by such unfavorable conditions as ambient temperature, sand, dust and rain, radiation, vibration and noise, the vehicle type, behavior of entry and exit of the parking space, overlay and obstacle, battery voltage, opening and closing of the gate, concurrency and waiting;
Reasonably foreseeable misuse, i.e., the conditions the system is used or operated according to readily predictable human behaviors, habits or habitual ways of thinking, outside specified procedures, as affected by such unexpected but reasonable conditions as misleading and mistaking occupation of the parking space, extended occupation of the parking space, ignoring or misinterpreting of the parking space state information, arbitrary fee collections and habitual cash payments, drivers who park without booking, who are not familiar with or without the driver terminal, unnecessary stay in the car park or failure to find the vehicle/the parking space as well as operations affecting driving safety;
Single fault conditions, i.e., the conditions under which preventive measures for protection against break-down of the information chain or the faults are present which may cause break-down of the information chain, where these fault conditions are simply summarized as failure of the equipment hardware or the communication.

This Invention considers thoroughly and provides means to prevent and correct the adverse effect of the most unfavorable normal use conditions, the reasonably foreseeable misuse as well as the single fault conditions on the expected functions, technical performance and customer experience of the system.

For the most unfavorable normal use conditions, the reasonably foreseeable misuse and the single fault conditions, this Invention considers the following measures:
The parking space state information is clearly presented through various media (including the APP driver terminal, the parking space field terminal 51 and the car park field terminal 52), to differentiate the available and unavailable parking spaces, to avoid misleading and mistaking occupation;
Ensure the technical performance of the hardware equipment (including the vehicle detection module 4, the parking space field terminal 51 and the car park field terminal 52) for normal working under conditions of harsh environment, low voltage, etc.;
Provide with redundant communication designs, such as the mobile communication (e.g., communication between the APP driver terminal and the cloud server 1 based on mobile communication network), the terminal communication (e.g., short range communication between the terminal communication module and the APP driver terminal), the cloud communication (e.g., communication between the cloud communication module and the cloud module 1) and the Ethernet communication (e.g., communication between the parking space field terminal 51 and the car park field terminal 52 in the same car park), to avoid incomplete and erroneous information caused by equipment fault, communication obstacle and other information hysteresis and loss;
The vehicle detection sensor, the parking space information, the parking space reservation information, the check-in information and the check-out information are combined to improve the accuracy and integrity of the parking space state information;
Economic and legal means, such as reporting by the driver, tour inspection and managing by the supervisor of the car park, and supervision and enforcement by the parking enforcement terminal 6 are used to ensure immediate correction of the abnormal information of the parking space once presented.

### 5.1. Reasonably foreseeable misuse:

With above-mentioned check-out of the parking space, the driver shall move the vehicle away from the parking space within the specified time; At this time, the parking space state changes from normal occupation to be consistent with the actual state, i.e., the parking space available, the parking space vacant or others. If the vehicle keeps staying on the parking space exceeding the limit for the duration, the cloud server 1 fails to receive the change of parking space state transmitted by the vehicle detection module 4 and adjusts the parking space state to be occupation without check-in of the parking space. The time for occupation without check-in of the parking space is calculated from the time at check-out of the parking space, and this kind of occupation without check-in of the parking space includes information for the vehicle license plate number; The other scenario of a vehicle's entry of the parking space, the information of the change for the parking space state from the vehicle detection module 4 is transmitted to the cloud server 1, while the cloud server 1 does not receive the information for check-in of the parking space from the driver within the specified time; At this time, the cloud server 1 adjusts the parking state to be occupation without check-in of the parking space with the information for the vehicle license plate number missing;
At expire of the parking time specified by the above-mentioned check-in information when the vehicle keeps remaining in the parking space, the parking space state information is changed from normal occupation to occupation without check-out of the parking space, and the time for occupation without check-out of the parking space is calculated from the time as limited for check-out of the parking space;
With the above-mentioned driver's direct exit from the parking space without check-out of the parking space, the parking space state becomes the parking space vacancy without check-out out of the parking space vacancy;
The parking space occupation without check-in of the parking space, the parking space occupation without check-out of the parking space and the parking space vacancy without check-out out of the above-mentioned parking states all indicate abnormal state of the parking space. The cloud server 1 transmits the parking space state information for three abnormal states of the parking space to the planar graph of parking space state of the electronic map module 7, the displayer of the parking space field terminal 51 and the displayer of the car park field terminal 52 for presenting;
Meanwhile, the cloud server 1 provides feedback of the parking space state information for above three abnormal states of the parking space to the supervisors through the APP supervisor terminal; When the abnormal state of the parking space is kept exceeding the specified time, it means violation, and the APP supervisor terminal reminds the supervisor of proceeding to manage; The supervisor proceeds to the corresponding parking space to manage following the parking space code, adjusts the parking space state information consistent with the current state of the parking space, and transmits the managing result to the cloud server 1 and the APP driver terminal respectively;
When finding violation vehicle, the supervisor collects evidence (including to obtain information for the vehicle license plate number based on image recognition) by use of the APP supervisor terminal, and transmits it to the APP parking enforcement terminal for accusation; When finding violation vehicle, the driver collects evidence (including to obtain information for the vehicle license plate number based on image recognition) by use of the APP driver terminal, and transmits it to the APP supervisor terminal and the APP parking enforcement terminal for reporting; Once the vehicle is complained, i.e., the vehicle respondent may be blocked for booking and check-in of the parking space according to severity and nature of, and rules against the violation;
When a camera or other detectors capable of automatic recognition of the vehicle license plate number are used for the vehicle detection sensor, the information of the violation vehicle, including the vehicle license plate number, location (i.e., geographical location for installation of the vehicle detection sensor) and the time, will be automatically uploaded to the cloud server 1 without needing the supervisor or other drivers to collect evidence;
When violation operation presented by the car park or the owner of the parking space, the driver collects evidence (including to obtain information for the vehicle license plate number based on image recognition) by use of the APP driver terminal and transmits it to the APP supervisor terminal and the APP parking enforcement terminal for complaining or reporting; Once complained due to service or management problem of the car park, the related parking space is shielded by the system without opportunity of being searched and booked by the driver once becoming the parking space respondent according to severity and nature of, and rules against the violation;
The APP parking enforcement terminal processes the abnormal complaint, and the processing results are finally transmitted to the cloud server 1 as well as the corresponding APP supervisor terminal and the APP driver terminal (informer), respectively;

### 5.2. Single fault conditions:

### 5.2.1. Abnormal communication;

Abnormal mobile communication/cloud communication, in case of abnormal communication between the APP driver terminal (or the APP supervisor terminal) and the cloud server 1, the APP driver terminal (or the APP supervisor terminal) cannot transmit successfully to the cloud server 1 the check-in information, the check-out information, and the transaction information; In case of abnormal communication between the cloud communication module and the cloud server 1, the vehicle detection module 4 cannot transmit successfully to the cloud server 1 the check-in information, the check-out information and the heartbeat message; Both of the above-mentioned scenarios may result in loss, hysteresis or mistake of information; The APP driver terminal (or the APP supervisor terminal ) and the terminal communication module of the corresponding parking space in this Invention exchanges the vehicle license plate number and the parking space code each other, then the APP driver terminal (or the APP supervisor terminal ) and the terminal communication module transmit respectively the check-in information/check-out information to the cloud server 1 by their own communication modes, so as to ensure, under single fault conditions, i.e., assumed that the communication neither between the APP driver terminal (or the APP supervisor terminal ), nor between the vehicle detection module 4 and the cloud server 1 fails at the same time, the operation for check-in and check-out of the parking space can still be completed normally;

### 5.2.2. Equipment fault;

The parking space faulted out of the parking space state information also belongs to the abnormal state of the parking space. Because the parking space faulted may result in restriction of the vehicle entry, detection failure of the parking space state and others, which directly cause loss, hysteresis or mistake of the information, it is affirmed by the system that such kind of the parking space cannot be used in case of the parking space faulted; Wherein the parking space faulted is mainly manifested as abnormal working of the parking space equipment, as the vehicle detection module 4, the parking space field terminal 51, the car park field terminal 52 and other hardware equipment will transmit periodically the heartbeat message to the cloud server 1, with the equipment abnormal, the supervisor can perform maintenance or replacement according to the equipment identification (the parking space code or the module code) and obtain abnormal record for the state change when necessary, so as to manage the parking space state information at the parking space faulted, i.e., the corresponding information not transmitted immediately to the cloud server 1 in case of the parking space faulted will not be lost or omitted, to ensure the integrity and accuracy of the information for the parking space service and management system.

In case of transmission failure of the information from the vehicle detection module 4 to the cloud server 1, the information will be saved in the cloud communication module, which transmits periodically (such as every 120 min) this information to the cloud server 1 again, until receipt of success from the cloud server 1 is received, and manages low-energy consumption of the equipment while ensuring stability of the parking space service and management system.

In case of abnormal communication of the terminal communication module, where the parking space state information cannot be transmitted to the APP driver terminal (or the APP supervisor terminal), then with memory only of the parking space code, the driver may complete the check-in and check-out operation of the parking space from the parking space field terminal 51 or the car park field terminal 52. With abnormal communication of the cloud communication module and failure to transmit information to the cloud server, the driver completes the check-in and check-out operation of the parking space by use of the APP driver terminal. In case of abnormal communication of the APP driver terminal on the parking space field, the driver executes check-in and check-out operation of the parking space by the parking space field terminal 51 or the car park field terminal 52 within specified time limit.

When the equipment is presented a failure, for example the fault of the vehicle detection module, the cloud server 1 is not able to completely receive any information from the cloud communication module; Because the cloud communication module periodically transmits the heartbeat message to the cloud server 1, the cloud server 1 can promptly find the abnormal condition of the equipment and immediately notify the supervisor for maintenance or replacement, so as to ensure normal operation of the parking space service and management system of this Invention.

### 5.3. Abnormal report, complaint or accusation;

When the supervisor terminal 2 or the parking enforcement terminal 6 receives a report for, complaint or accusation against the parking space faulted, the car park violation or the vehicle violation, the supervisor or the parking enforcement officer checks the report or evidence submitted, and proceeds to the site for verification when necessary. If the content reported for, complained or accused against is true after verification, the supervisor terminal 2 or the parking enforcement terminal 6 provides feedback to the complainant (the supervisor or the driver), and the parking space respondent or the vehicle respondent with serious violation may not be allowed for normal operation or park.

When finding abnormal condition of the parking space or violation behavior of the other vehicle, the driver may collect evidence (including to obtain information for the vehicle license plate number based on image recognition) by use of the driver terminal 3, and report or complain it to the supervisor terminal 2 or the parking enforcement terminal 6.

## Claims

1. A parking space service and management system based on parking space state information, **characterized by**:
the said parking space service and management system comprising a cloud server (1), and a supervisor terminal (2), a driver terminal (3), a vehicle detection module (4), a field terminal component (5) and a parking enforcement terminal (6) connected by signal to the cloud server (1); the said supervisor terminal (2), the driver terminal (3), the field terminal component (5) and the parking enforcement terminal (6) being all integrated with an electronic map module (7) connected by signal with the cloud server (1);
the said supervisor terminal (2) and the driver terminal (3) being connected by signal, and both the supervisor terminal (2) and the driver terminal (3) being connected by signal to the vehicle detection module (4), the field terminal component (5) and the parking enforcement terminal (6);
the said cloud server (1) being adapted to receive, store, process and update all car park information and vehicle information;
the said supervisor terminal (2) being adapted to upload a parking space information to the cloud server (1), as well as to monitor an abnormal state of the parking space and notify a supervisor for in-time management, and being further adapted to assist a driver for booking of the parking space, amendment and cancellation, check-in of the parking space and check-out of the parking space;
the said parking space information comprising at least a parking space code, dimensions of the parking space, an available period and a limit for the parking duration;
the said parking space information also including information whether a parking space is specific for permit parking, whether a parking space is for temporary parking, whether a parking space is a rechargeable parking space and whether a parking space is for automatic parking,
a parking space specific for permit parking meaning a parking space under permit conditions accepted for booking and parking,
a parking space for temporary parking meaning a parking space for park-now only, and at the expiry of the limit for the parking duration, the parking space must be checked out and the vehicle must be removed from the parking space, a parking space for temporary parking may be limited by permit conditions,
a rechargeable parking space meaning a parking space equipped with EV power supply equipment for recharging of battery packs for electric vehicles or accessory power supply for on-board electric equipment, and
a parking space for automatic parking meaning a parking space with infrastructure for automatic parking for vehicles with automatic or semi-automatic assisted parking system or automatic driving system;
the said driver terminal (3) being adapted to transmit parking space demand information to the cloud server (1) for reservation and amendment of a parking space, as well as to transmit check-in information and to transmit check-out information to the cloud server (1) for a parking space; the said parking space demand information including at least a name of destination, the vehicle license plate number, a parking start time and a parking duration;
the said vehicle detection module (4) being adapted to derive parking space occupancy information, by detecting a parking space occupancy state, namely whether the parking space is occupied or vacant, and/or by automatically recognizing the vehicle license plate number if a vehicle is present, and to transmit the parking space occupancy information to the cloud server (1), the supervisor terminal (2), and the driver terminal (3);
the said cloud server (1) being adapted to generate seven types of parking space state, namely: normal occupation, occupation without check-in and occupation without check-out, parking space available, parking space reserved, parking space vacant without check-out and parking space faulted, according to the occupancy state information of the parking space, the parking space information, the parking space reservation information and parking information, the parking space state information being capable of being updated, the said parking information comprising at least the parking space code, the vehicle license plate number if recognized, and the time for the check-in and the check-out;
normal occupation meaning successful check-in of the parking space by the corresponding vehicle on the parking space and within the limit for the parking duration of the parking space as checked-in,
occupation without check-in meaning no check-in of, or failure to check in the parking space and the case where extended standing after check-out of the parking space by the corresponding vehicle on the parking space,
parking space available meaning a corresponding parking space available for booking and parking,
parking space reserved meaning a corresponding parking space having been reserved for parking by the corresponding vehicle only,
parking space vacant without check-out meaning a parking space in which the vehicle has exited without check-out or has failed to check out the parking space,
occupation without check-out meaning an extended stay beyond the limit for parking duration with successful check-in by the corresponding vehicle, and
parking space faulted meaning a parking space unavailable caused by physical reasons;
the said cloud server (1) being adapted to synchronize the parking space information and the parking space state information for each of the parking spaces, as well as the parking space reservation information and the parking information corresponding to parking on the parking spaces and to pass the information to the electronic map module (7); the said electronic map module (7) being adapted to receive the information transmitted by the cloud server (1), having it presented through the supervisor terminal (2) , the driver terminal (3), the field terminal component (5) and the parking enforcement terminal (6) in the form of texts or graphic symbols and colours;
the said electronic map module (7) comprising a planar graph of parking space state with navigation function; the said planar graph of parking space state including the parking space information, the parking space state information, namely whichever one of the seven types of parking space state applies to a particular parking space, the parking space reservation information and the parking information of all parking spaces in the car park; and
the said parking enforcement terminal (6) being adapted for supervising illegal parking.

2. A parking space service and management system based on parking space state information according to Claim 1, characterized also by:
the said cloud server (1) being further adapted to receive, store, process and update a transaction information and a heartbeat message; the car park information including at least the parking space information and the parking space state information of the same car park;
the said parking space state information being kept according to a parking space code, including at least a parking space code, a parking space state as well as a time for state change; the parking space state including also parking space unavailable and parking space respondent; the vehicle information including at least the vehicle license plate number, as well as the parking space demand information, the parking space reservation information, the parking information and the vehicle respondent being provided in the form of the vehicle license plate number; the said parking space reservation information including at least the parking space code as reserved, the vehicle license plate number, a scheduled parking start time and the parking duration; the said parking information including at least the vehicle license plate number and the parking space code, as well as the time for check-in of the parking space and/or the time for check-out of the parking space; the said check-in of the parking space referring to a report or an action for a driver to express his parking intention, to accept terms and conditions of the parking service and management, and to confirm initiation of parking; the said check-out of the parking space referring to a report or an action for a driver to acknowledge a parking fact, to accept the terms and conditions of the parking service and the management, and to confirm termination of parking; the said vehicle respondent meaning a vehicle in a process of hearing for an abnormal complaint;
the said supervisor terminal (2) being further adapted to assist a driver for fee collection, and to collect evidence for an abnormal state of the parking space and to have it distributed to the driver terminal (3) for management or the parking enforcement terminal (6) for accusation; the supervisor being able to check the parking space state information in the car park through the electronic map module (7) of the supervisor terminal (2) and to navigate to the corresponding parking space according to the positioning and navigation of the electronic map module (7); the cloud server (1) being adapted to synchronize the parking space state information, the parking space reservation information and the transaction information and to pass the information to the supervisor terminal (2);
the said driver terminal (3) being further adapted to make payment and extend the parking duration, as well as to collect evidence of an abnormal state of the parking space and to have it distributed to the supervisor terminal (2) for report and complaint, or the parking enforcement terminal (6) for accusation, the driver being able to check the parking space state information in the car park through the electronic map module (7) of the driver terminal (3), and to navigate to the corresponding parking space according to the positioning and navigation of the electronic map module (7); the cloud server (1) synchronizing the parking space demand information, the parking space reservation information, information for entry and exit, the parking information and the transaction information to the driver terminal (3);
the parking enforcement terminal (6) being adapted to check the parking information of any parking space, collect evidence, record and enforce an illegal vehicle by comparing the parking information with the actual vehicle standing information; an enforcement officer being able to check the abnormal information of the parking space in the car park through the electronic map module (7) of the parking enforcement terminal (6) and to navigate to the corresponding parking space according to the positioning and navigation of the electronic map module (7) for enforcement; the parking enforcement terminal (6) being further adapted to receive, store and process information for complaint or accusation from the supervisor terminal (2) and the driver terminal (3), and to enforce an illegal vehicle after verifying the information for complaint or accusation;
the said field terminal component (5) comprising a parking space field terminal (51) and a car park field terminal (52); both the said parking space field terminal (51) and the car park field terminal (52) including a displayer, and a communication module, a payment module and a human-machine interface connected to the displayer, the payment module being connected to the communication module and the human-machine interface, respectively; the said displayer being adapted to represent the parking space information, the parking space state information and the parking information of the corresponding parking space in text, graphic and/or acousto-optic signal;
the said communication module being connected by signal to the cloud server (1), the supervisor terminal (2), the driver terminal (3) and the parking enforcement terminal (6) respectively; the cloud server (1) being adapted to synchronize the parking space information, the parking space state information, the parking information and the reservation information corresponding to all parking spaces in the car park and to pass the information to the car park field terminal (52); the cloud server (1) being adapted to synchronize the parking space information, the parking space state information, the parking information and the reservation information corresponding to the parking space and to pass it to the parking space field terminal (51);
the said parking space field terminal (51) being adapted to present the corresponding parking space information, the parking space state information, the parking space reservation information and the parking information, for the driver to book the parking duration, as well as check in and check out the parking space and make payment;
the said car park field terminal (52) being adapted to present the planar graph of parking space state, as well as the parking space information, the parking space state information, the parking space reservation information and the parking information of all parking spaces in the car park, for the driver to book the parking duration, as well as check in and check out the parking space and make payment.

3. A parking space service and management system based on parking space state information according to Claim 1 or Claim 2, characterized also by:
the said supervisor terminal (2) comprising a PC supervisor terminal and an APP supervisor terminal with camera function;
the said PC supervisor terminal being adapted to display a parking planar graph of the car park and dynamic information of vehicle entry and exit of the car park; the said dynamic information of vehicle entry and exit including at least the parking space code, the vehicle license plate number, scheduled parking start/end time, actual parking start/end time, entry or exit, check-in or check-out of the parking space, type of amendment and time, parking space reallocation and corresponding parking space state information; dynamic information of vehicle entry and exit taking time as master axis, with current information ahead of historical information, and abnormal information prior to normal information; the APP supervisor terminal being adapted to display a planar graph of parking space state and to provide navigation for the supervisor, and being further adapted to realize parking space management, collect evidence and make complaints, and to book, check in and check out parking spaces on behalf of customers and accept payment, as well as collect evidence of violation vehicles and report it to the parking enforcement terminal (6);
the said driver terminal (3) comprising a PC driver terminal and an APP driver terminal with camera function;
the said PC driver terminal being adapted to display the planar graph of parking space state, the APP driver terminal being adapted to display the planar graph of parking space state and provide navigation for the driver, and being further adapted to collect evidence and make complaints, book a parking space on-site, make payment, check in and check out the parking space;
the said parking enforcement terminal (6) comprising a PC parking enforcement terminal and an APP parking enforcement terminal with camera function;
the said PC parking enforcement terminal being adapted to display a planar graph of parking space state; the APP parking enforcement terminal being further adapted to display the planar graph of parking space state and provide navigation for the enforcement officer to achieve on-site evidence collection and enforcement.

4. A parking space service and management method using a system according to any of Claims 1-3, **characterized by** steps as follows:
1.1 publication of parking space information,
the supervisor or owner of the parking space publishing the parking space information on the cloud server (1) by use of the supervisor terminal (2);
the said parking space information including at least the parking space code, dimensions of the parking space, the available period and the limit for the parking duration;
1.2 acquisition of parking space reservation information,
the driver uploading the parking space demand information to the cloud server (1) by use of the driver terminal (3); the said parking space demand information including at least the name of destination, the vehicle license plate number, the parking start time and the parking duration; the cloud server (1) matching the parking space demand information as received with the parking space information; feedback of the parking spaces successfully matched being provided to the driver by the driver terminal (3); the driver selecting an applicable parking space by the driver terminal (3) and confirming a reservation; then the cloud server (1) updating the parking space reservation information to the supervisor terminal (2) and the driver terminal (3) respectively;
the said parking space reservation information including at least the parking space code, the vehicle license plate number, the parking start time and the parking duration;
1.3 detection of parking space occupancy state,
with the vehicle entry or exit of the parking space, the vehicle detection module (4) located in the parking space detecting the occupancy state change of the parking space; the vehicle detection module (4) transmitting the occupancy state information of the parking space to the supervisor terminal (2), the driver terminal (3) and the cloud server (1) respectively;
1.3.1 wherein, when the parking space having been occupied as detected by the vehicle detection module (4), then the parking space occupancy state is parking space occupied; the said cloud server (1) generating three types of the parking space states, namely: normal occupation, occupation without check-in and occupation without check-out, according to the occupancy state information of the parking space, the parking space information, the parking space reservation information and parking information;
the said parking information including at least the parking space code, the vehicle license plate number and the time for check-in of the parking space and/or check-out of the parking space;
1.3.2 wherein, when the parking space is detected as being vacant by the vehicle detection module (4), then the parking space occupancy state is parking space vacant; the said cloud server (1) generating four types of the parking space states, namely: parking space available, parking space reserved, parking space vacant without check-out and parking space faulted according to the occupancy state information of the parking space, the parking space information, the parking space reservation information and the parking information;
1.4 all parking spaces in the car park being marked with text or graphic sign and colour, and presented on the electronic map module (7) of the supervisor terminal (2), the driver terminal (3) and the field terminal component (5), according to the parking space states in steps 1.3.1 and 1.3.2; the drivers booking, checking in and checking out the parking spaces by use of the driver terminal (3); and the supervisors managing the parking spaces by use of the supervisor terminal (2).

5. A parking space service and management method based on parking space state information according to Claim 4, characterized also by:
the drivers reporting a fault or making complaints by use of the driver terminal (3); the supervisors making tour inspection for, collecting evidence of, managing the parking space or adjusting the parking space state information by use of the supervisor terminal (2);
the detailed operation procedures for check-in of the parking space following the said step 1.3.1 being as follows:
upon vehicle entry of the parking space, the driver terminal (3) receiving the occupancy state information of the parking space transmitted by the vehicle detection module (4) in the said step 1.3; the driver terminal (3) extending a welcome message to the driver, displaying the parking space code and requesting the driver to check in the parking space; upon the driver confirming check in to the parking space, the driver terminal (3) transmitting check-in information to the cloud server (1), which receives and compares the information; upon successful comparison, the cloud server (1) binding the vehicle license plate number and the parking space code, recording the time for check-in of the parking space, and providing feedback of information for successful check-in of the parking space to the supervisor terminal (2) and the driver terminal (3); the check-in information including at least the parking space code, the vehicle license plate number, the time for check-in of the parking space, the scheduled parking end time and the parking duration;
the detailed operation procedures for check-out of the parking space following the said step 1.3.2 being as follows:
prior to the vehicle exit of the parking space, the driver first checking out the parking space by use of the driver terminal (3); the driver terminal (3) transmitting check-out information to the cloud server (1), which receives and compares the information; upon successful comparison, the cloud server (1) unbinding the vehicle license plate number and the parking space code, recording the time for check-out of the parking space, and providing feedback of confirmation information for the check-out of the parking space to the supervisor terminal (2) and the driver terminal (3); upon the vehicle exiting the parking space, the change of occupancy state information of the parking space being detected by the vehicle detection module (4) and transmitted to the cloud server (1) through the cloud communication module; the cloud server (1) providing feedback of the information for successful check-out of the parking space to the supervisor terminal (2) and the driver terminal (3); the above-mentioned check-out information including at least the parking space code, the vehicle license plate number, and the time for check-out of the parking space.

6. A parking space service and management method based on parking space state information according to Claim 5, characterized also by:
check-in of parking spaces in the said step 1.2 being operated by use of the field terminal component (5), with detailed operation steps as follows:
A. park-now,
upon parking space state information being presented on the said field terminal component (5), the driver transmitting the parking duration and the vehicle license plate number to the field terminal component (5) by use of the driver terminal (3), and selecting an available parking space through the field terminal component (5) to check in the parking space; the field terminal component (5) transmitting the information for the check-in of the parking space to the cloud server (1), the supervisor terminal (2) and the corresponding driver terminal (3) respectively; after receiving the information for the check-in of the parking space, the cloud server (1) binding the corresponding vehicle license plate number and the parking space code, recording the time for check-in of the parking space, providing feedback of the information for successful check-in of the parking space to the supervisor terminal (2) and the driver terminal (3); the parking space state being presented consistent with the check-in information;
B. reserved parking,
upon parking space reservation information being transmitted to the field terminal component (5) through the driver terminal (3) by the driver, the field terminal component (5) comparing the parking space reservation information with the current time; upon the comparison being matched, the field terminal component (5) transmitting information for the check-in of the parking space to the cloud server (1), the supervisor terminal (2) and the driver terminal (3) respectively, the cloud server (1) binding the corresponding vehicle license plate number and the parking space code, recording the time for check-in of the parking space, providing feedback of the information for successful check-in of the parking space to the supervisor terminal (2) and the driver terminal (3); the parking space state being presented consistent with the check-in information;
the check-out of the parking spaces in step 1.3.2 being operated by use of the field terminal component (5), with detailed operation steps as follows:
the driver transmitting the check-out information to the field terminal component (5) by use of the driver terminal (3); the field terminal component (5) transmitting to the cloud server (1), the supervisor terminal (2) and the driver terminal (3) respectively confirmation information for the check-out of the parking space; upon the vehicle exiting the parking space, the change of the parking space occupancy information being detected by the vehicle detection module (4) and transmitted to the cloud server (1) through the cloud communication module; the cloud server (1) transmitting to the supervisor terminal (2) and the driver terminal (3) the information for check-out of the parking space; the cloud server (1) unbinding the corresponding vehicle license plate number and the parking space code, recording the time for check-out of the parking space, and providing feedback of the information for successful check-out of the parking space to the supervisor terminal (2); the parking space state being presented consistent with the information for successful check-out;
the said driver terminal (3) transmitting abnormal reports and complaints through the field terminal component (5), including parking space fault, and abnormal occupation of the parking space;
the said supervisor terminal (2) managing the parking spaces on-site through the field terminal component (5) and by tour inspection, including the parking space unavailability, abnormal occupation of the parking space, and where necessary check-in and check-out of the parking space on behalf of the driver;
the said parking enforcement terminal (6) conducting field enforcement through the field terminal component (5) and by tour inspection, including applying a ticket and enforcing a violation.

7. A parking space service and management method based on parking space state information according to Claim 6, characterized also by:
the said field terminal component (5) comprising the parking space field terminal (51);
for a driver without a driver terminal (3), the method of parking method including steps as follows:
according to the parking space state presented by the parking space field terminal (51), parking the vehicle in an available parking space; and inputting the parking duration and the vehicle license plate number through the parking space field terminal (51) to check in the parking space and make payment as required; the parking space state being presented consistent with the check-in information after successful check-in of the parking space; at the end of parking, first checking out the parking space through the parking space field terminal (51), and then moving the vehicle away from the corresponding parking space, the parking space state being presented consistent with fact of the parking space after successful check-out of the parking space;
for the supervisor by use of the parking space field terminal (51), a parking space management method including steps as follows:
checking parking spaces for abnormal occupation according to the parking space state presented on the parking space field terminal (51), and entering the vehicle license plate number and abnormal fact through the parking space field terminal (51), recording and managing the abnormal;
for the parking enforcement officer by use of the parking space field terminal (51), the parking space management method including steps as follows:
checking parking spaces for abnormal occupation according to the parking space state presented on the parking space field terminal (51); entering the vehicle license plate number and abnormal fact through the parking space field terminal (51); recording and managing the abnormal.

8. A parking space service and management method based on parking space state information according to Claim 6, characterized also by:
the said field terminal component (5) comprising the car park field terminal (52);
for a driver without a driver terminal (3), the parking method including steps as follows:
after the vehicle entry to the car park, the driver checking and selecting the available parking space, parking the vehicle and recording the parking space code, and then inputting the parking space code, the vehicle license plate number and the parking duration through the car park field terminal (52) to check in and make payment as required; the parking space state being presented consistent with check-in information after successful check-in of the parking space; at the end of parking, entering the parking space code in the car park field terminal (52) to check out the parking space; the parking space state being presented consistent with fact of the parking space after successful check-out of the parking space;
for the supervisor by use of the car park field terminal (52), the parking space management method including steps as follows:
checking parking spaces for abnormal occupation according to the parking space state presented on the car park field terminal (52); entering the vehicle license plate number and abnormal fact through the car park field terminal (52), recording and managing the abnormal.

9. A parking space service and management method based on parking space state information according to any of Claims 4-8, characterized also by:
when the said vehicle having not checked in, or having failed to check in the parking space, the vehicle license plate number being missing at occupation without check-in; for extended standing of and after checked-out of the parking space, the vehicle license plate number being that of the corresponding vehicle;
the said parking space state also including the parking space unavailable and the parking space respondent;
the said parking space unavailable meaning a parking space not available for booking and parking;
the said parking space respondent meaning a parking space in a process of hearing for an abnormal complaint; the information for the parking space respondent being shielded in a searching result and at booking without being booked by the drivers.

10. A parking space service and management method based on parking space state information according to Claim 9, characterized also by:
out of the parking space state information in the said step 1.3, parking spaces with occupation without check-in, occupation without check-out, vacancy without check-out and the parking space fault all being abnormal states; and the cloud server (1) providing feedback of the information for the above-mentioned, four types of abnormal parking space states to the supervisor through the supervisor terminal (2), the supervisor managing the corresponding parking spaces through navigation by use of the parking space code and the planar graph of parking space states of the electronic map module (7), adjusting the parking space state information consistent with the current state of a parking space, and distributing the processing results to the cloud server (1) and the driver terminal (3), respectively;
a driver collecting evidence of an abnormal state of a parking space by use of the driver terminal (3) and reporting to the supervisor terminal (2) or making complaints to the parking enforcement terminal (6) with the collected evidence;
the supervisor managing the parking spaces with an abnormal state by use of the supervisor terminal (2), adjusting the parking space state information consistent with the actual state of the parking space, collecting evidence of abnormal state of the parking space, and reporting to the parking enforcement terminal (6) with collected evidence;
the parking enforcement terminal (6) processing abnormal complaints, additionally collecting evidence on site and processing the abnormal; finally, the processing results being transmitted to the cloud server (1), the corresponding supervisor terminal (2) and driver terminal (3) respectively;
the said vehicle respondent being restricted at the time of booking and check-in of the parking space, neither to book a parking space nor to park now.

## Patentansprüche

1. Ein Parkraumservice- und -managementsystem, das auf Parkraumzustandsinformationen basiert, **gekennzeichnet durch**:
das besagte System zur Parkraumbewirtschaftung und -verwaltung umfasst einen Cloud-Server (1) und ein Überwachungs-Terminal (2), ein Fahrer-Terminal (3), ein Fahrzeugerkennungsmodul (4), eine Feld-Terminal-Komponente (5) und ein Parkerzwingungs-Terminal (6), die durch ein Signal mit dem Cloud-Server (1) verbunden sind; das besagte Überwachungs-Terminal (2), das Fahrer-Terminal (3), die Feld-Terminal-Komponente (5) und das Parkerzwingungs-Terminal (6) sind alle mit einem elektronischen Kartenmodul (7) integriert, das durch ein Signal mit dem Cloud-Server (1) verbunden ist;
wobei das Überwachungs-Terminal (2) und das Fahrer-Terminal (3) durch ein Signal verbunden sind und sowohl das Überwachungs-Terminal (2) als auch das Fahrer-Terminal (3) durch ein Signal mit dem Fahrzeugerkennungsmodul (4), der Feld-Terminal-Komponente (5) und dem Parkkontroll-Terminal (6) verbunden sind;
der besagte Cloud-Server (1) ist geeignet, alle Parkplatz- und Fahrzeuginformationen zu empfangen, zu speichern, zu verarbeiten und zu aktualisieren;
wobei das Überwachungs-Terminal (2) geeignet ist, eine Parkplatzinformation auf den Cloud-Server (1) hochzuladen sowie einen abnormalen Zustand des Parkplatzes zu überwachen und eine Überwachungsperson zur rechtzeitigen Verwaltung zu benachrichtigen, und ferner geeignet ist, einen Fahrer bei der Buchung des Parkplatzes, der Änderung und Stornierung, dem Einchecken des Parkplatzes und dem Auschecken des Parkplatzes zu unterstützen;
Die Parkplatzinformationen umfassen mindestens einen Parkplatzcode, die Abmessungen des Parkplatzes, eine verfügbare Zeitspanne und ein Limit für die Parkdauer;
die besagten Parkplatzinformationen beinhalten auch Informationen darüber, ob ein Parkplatz speziell für das Parken mit Genehmigung vorgesehen ist, ob ein Parkplatz für zeitlich begrenztes Parken vorgesehen ist, ob ein Parkplatz ein wiederaufladbarer Parkplatz ist und ob ein Parkplatz für automatisches Parken vorgesehen ist,
ein Parkplatz, der speziell für das Parken mit Parkschein vorgesehen ist, d. h. ein Parkplatz mit Parkschein, der für die Buchung und das Parken akzeptiert wird,
ein Parkplatz für zeitlich begrenztes Parken, d.h. ein Parkplatz, der nur zum Parken dient, und bei Ablauf der begrenzten Parkdauer muss der Parkplatz abgemeldet und das Fahrzeug vom Parkplatz entfernt werden; ein Parkplatz für zeitlich begrenztes Parken kann durch Genehmigungsbedingungen begrenzt werden,
ein aufladbarer Parkplatz, d.h. ein Parkplatz, der mit einer EV-Stromversorgungseinrichtung zum Aufladen von Batterien für Elektrofahrzeuge oder einer zusätzlichen Stromversorgung für bordeigene elektrische Geräte ausgestattet ist, und
ein Parkplatz für automatisches Parken, d.h. ein Parkplatz mit Infrastruktur für automatisches Parken für Fahrzeuge mit automatischer oder halbautomatischer Einparkhilfe oder
automatischem Fahrsystem;
wobei das Fahrerterminal (3) in der Lage ist, Parkplatzanforderungsinformationen an den Cloud-Server (1) zu übertragen, um einen Parkplatz zu reservieren und zu ändern, sowie Eincheckinformationen und Auscheckinformationen an den Cloud-Server (1) für einen Parkplatz zu übertragen; wobei die Parkplatzanforderungsinformationen mindestens einen Namen des Ziels, das Fahrzeugkennzeichen, eine Parkbeginnzeit und eine Parkdauer enthalten;
wobei das Fahrzeugerkennungsmodul (4) so ausgelegt ist, dass es Informationen über die Belegung des Parkplatzes ableitet, indem es einen Belegungszustand des Parkplatzes erkennt, nämlich ob der Parkplatz belegt oder frei ist, und/oder indem es automatisch das Kennzeichen des Fahrzeugs erkennt, wenn ein Fahrzeug vorhanden ist, und die Informationen über die Belegung des Parkplatzes an den Cloud-Server (1), das Überwachungsterminal (2) und das Fahrerterminal (3) übermittelt;
wobei der Cloud-Server (1) so eingerichtet ist, dass er sieben Arten von Stellplatzzuständen erzeugt, nämlich: normale Belegung, Belegung ohne Abmeldung und Belegung ohne Abmeldung, freier Stellplatz, reservierter Stellplatz, freier Stellplatz ohne Abmeldung und fehlerhafter Stellplatz, entsprechend der Information über den Belegungszustand des Stellplatzes, der Stellplatzinformation, der Stellplatzreservierungsinformation und der Parkinformation, wobei die Stellplatzzustandsinformation aktualisiert werden kann,
die besagten Parkinformationen umfassen mindestens den Parkplatzcode, das Kennzeichen des Fahrzeugs, falls erkannt, und die Zeit für das Ein- und Auschecken,
normale Belegung, d. h. erfolgreiches Einchecken des Fahrzeugs auf dem Parkplatz und innerhalb des Zeitlimits für die Parkdauer des Parkplatzes als eingecheckt,
Belegung ohne Einchecken, d.h. kein Einchecken oder Nicht-Einchecken auf dem Parkplatz und längeres Stehen nach dem Auschecken des Parkplatzes mit dem entsprechenden Fahrzeug auf dem Parkplatz,
Parkplatz verfügbar bedeutet, dass ein entsprechender Parkplatz zum Buchen und Parken verfügbar ist,
reservierter Parkplatz: ein entsprechender Parkplatz, der nur für das entsprechende Fahrzeug reserviert ist,
Ein Parkplatz, der ohne Abmeldung frei ist, ist ein Parkplatz, den das Fahrzeug ohne Abmeldung verlassen hat oder auf dem es nicht abgemeldet wurde,
Belegung ohne Auschecken, d.h. ein längerer Aufenthalt über die Höchstparkdauer hinaus mit erfolgreichem Einchecken des entsprechenden Fahrzeugs, und
Parkplatz defekt bedeutet, dass ein Parkplatz aus physischen Gründen nicht verfügbar ist;
der besagte Cloud-Server (1) geeignet ist, die Parkplatzinformationen und die Parkplatzzustandsinformationen für jeden der Parkplätze sowie die Parkplatzreservierungsinformationen und die Parkinformationen, die dem Parken auf den Parkplätzen entsprechen, zu synchronisieren und die Informationen an das elektronische Kartenmodul (7) weiterzuleiten; das besagte elektronische Kartenmodul (7) geeignet ist, die vom Cloud-Server (1) übertragenen Informationen zu empfangen, indem es sie durch das Überwachungsterminal (2), das Fahrerterminal (3), die Feldterminalkomponente (5) und das Parkkontrollterminal (6) in Form von Texten oder grafischen Symbolen und Farben darstellen lässt;
das elektronische Kartenmodul (7) ein ebenes Diagramm des Parkraumzustands mit Navigationsfunktion umfasst; wobei das ebene Diagramm des Parkraumzustands die Parkrauminformation, die Parkraumzustandsinformation, nämlich welche der sieben Arten des Parkraumzustands für einen bestimmten Parkraum gilt, die Parkraumreservierungsinformation und die Parkinformation aller Parkplätze in dem Parkhaus enthält; und
der besagte Parkautomaten (6) ist für die Überwachung von Falschparkern geeignet.

2. Parkraumservice- und -managementsystem auf der Grundlage von Parkraumzustandsinformationen nach Anspruch 1, **gekennzeichnet durch**:
wobei der Cloud-Server (1) ferner dafür ausgelegt ist, eine Transaktionsinformation und eine Heartbeat-Nachricht zu empfangen, zu speichern, zu verarbeiten und zu aktualisieren; wobei die Parkplatzinformation zumindest die Stellplatzinformation und die Stellplatzzustandsinformation desselben Parkplatzes enthält;
die Parkraumzustandsinformation wird gemäß einem Parkraumcode aufbewahrt, der mindestens einen Parkraumcode, einen Parkraumzustand sowie eine Zeit für die Zustandsänderung umfasst; der Parkraumzustand umfasst auch einen nicht verfügbaren Parkraum und einen Parkraumbeantworter; die Fahrzeuginformation, die mindestens das Fahrzeugkennzeichen sowie die Parkplatzanforderungsinformation, die Parkplatzreservierungsinformation, die Parkplatzinformation und den Fahrzeugbeantworter umfasst, die in Form des Fahrzeugkennzeichens bereitgestellt werden; wobei die Parkplatzreservierungsinformation mindestens den Parkplatzcode als reserviert, das Fahrzeugkennzeichen, eine geplante Parkbeginnzeit und die Parkdauer umfasst; die Parkplatzinformation, die mindestens das Fahrzeugkennzeichen und den Parkplatzcode sowie die Zeit für das Einchecken in den Parkplatz und/oder die Zeit für das Auschecken aus dem Parkplatz enthält; wobei sich das Einchecken in den Parkplatz auf eine Meldung oder eine Aktion für einen Fahrer bezieht, um seine Parkabsicht zu bekunden, die Bedingungen des Parkdienstes und der Parkraumbewirtschaftung zu akzeptieren und den Beginn des Parkens zu bestätigen; das besagte Auschecken des Parkplatzes bezieht sich auf einen Bericht oder eine Handlung für einen Fahrer, um eine Tatsache des Parkens zu bestätigen, die Bedingungen des Parkdienstes und der Verwaltung zu akzeptieren und die Beendigung des Parkens zu bestätigen; das besagte befragte Fahrzeug bedeutet ein Fahrzeug in einem Verfahren zur Anhörung wegen einer anormalen Beschwerde;
das besagte Überwachungs-Terminal (2) ist außerdem dazu geeignet, einen Fahrer bei der Gebührenerhebung zu unterstützen und Beweise für einen anormalen Zustand des Parkplatzes zu sammeln und sie an das Fahrer-Terminal (3) zur Verwaltung oder an das Terminal zur Durchsetzung der Parkvorschriften (6) zur Anklage zu übermitteln; die Aufsichtsperson in der Lage ist, die Parkraumzustandsinformationen in dem Parkhaus durch das elektronische Kartenmodul (7) des Aufsichtsterminals (2) zu überprüfen und zu dem entsprechenden Parkraum gemäß der Positionierung und Navigation des elektronischen Kartenmoduls (7) zu navigieren; der Cloud-Server (1) angepasst ist, die Parkraumzustandsinformationen, die Parkraumreservierungsinformationen und die Transaktionsinformationen zu synchronisieren und die Informationen an das Aufsichtsterminal (2) weiterzuleiten;
das besagte Fahrerterminal (3) ist ferner dazu geeignet, die Zahlung vorzunehmen und die Parkdauer zu verlängern sowie Beweise für einen anormalen Zustand des Parkplatzes zu sammeln und sie an das Überwachungs-Terminal (2) zur Meldung und Beschwerde oder an das Parkraumüberwachungs-Terminal (6) zur Anklage zu übermitteln, wobei der Fahrer in der Lage ist, die Informationen über den Zustand des Parkplatzes im Parkhaus über das elektronische Kartenmodul (7) des Fahrerterminals (3) zu überprüfen und zum entsprechenden Parkplatz gemäß der Positionierung und Navigation des elektronischen Kartenmoduls (7) zu navigieren;
den Cloud-Server (1), der die Parkplatzbedarfsinformationen, die Parkplatzreservierungsinformationen, die Informationen für die Ein- und Ausfahrt, die Parkinformationen und die Transaktionsinformationen mit dem Fahrerterminal (3) synchronisiert;
das Terminal (6) zur Durchsetzung der Parkvorschriften ist dazu geeignet, die Parkinformationen eines beliebigen Parkplatzes zu überprüfen, Beweise zu sammeln, aufzuzeichnen und ein illegales Fahrzeug durch Vergleich der Parkinformationen mit den tatsächlichen Fahrzeugstandinformationen durchzusetzen; ein Vollzugsbeamter ist in der Lage, die anormalen Informationen des Parkplatzes in dem Parkhaus durch das elektronische Kartenmodul (7) des Terminals (6) zur Durchsetzung der Parkvorschriften zu überprüfen und zu dem entsprechenden Parkplatz gemäß der Positionierung und Navigation des elektronischen Kartenmoduls (7) zu navigieren; wobei der Parkerzwingungsterminal (6) ferner dafür ausgelegt ist, Informationen zur Beschwerde oder Anklage von dem Überwachungsterminal (2) und dem Fahrerterminal (3) zu empfangen, zu speichern und zu verarbeiten, und ein illegales Fahrzeug nach Verifizierung der Informationen zur Beschwerde oder Anklage zu erzwingen;
wobei die Feldterminal-Komponente (5) ein Parkplatz-Feldterminal (51) und ein Parkplatz-Feldterminal (52) umfasst; wobei sowohl das Parkplatz-Feldterminal (51) als auch das Parkplatz-Feldterminal (52) ein Anzeigegerät und ein Kommunikationsmodul, ein Zahlungsmodul und eine Mensch-Maschine-Schnittstelle, die mit dem Anzeigegerät verbunden sind, umfassen, wobei das Zahlungsmodul mit dem Kommunikationsmodul bzw. der Mensch-Maschine-Schnittstelle verbunden ist; wobei das Anzeigegerät so angepasst ist, dass es die Parkplatz-Information, die Parkplatz-Zustands-Information und die Parkplatz-Information des entsprechenden Parkplatzes in einem Text-, Grafik- und/oder akusto-optischen Signal darstellt;
das besagte Kommunikationsmodul ist durch ein Signal mit dem Cloud-Server (1), dem Überwachungs-Terminal (2), dem Fahrer-Terminal (3) bzw. dem Parkraumüberwachungs-Terminal (6) verbunden; der Cloud-Server (1) ist so ausgelegt, dass er die Stellplatz-Informationen, die Stellplatz-Zustands-Informationen, die Park-Informationen und die Reservierungs-Informationen, die allen Stellplätzen in dem Parkhaus entsprechen, synchronisiert und die Informationen an das Parkraum-Feld-Terminal (52) weiterleitet; der Cloud-Server (1) so eingerichtet ist, dass er die Parkplatzinformationen, die Parkplatzzustandsinformationen, die Parkinformationen und die Reservierungsinformationen, die dem Parkplatz entsprechen, synchronisiert und sie an das Parkplatz-Feldterminal (51) weiterleitet;
das besagte Parkplatz-Feldterminal (51) ist so ausgelegt, dass es die entsprechenden Parkplatzinformationen, die Parkplatzzustandsinformationen, die Parkplatzreservierungsinformationen und die Parkplatzinformationen anzeigt, damit der Fahrer die Parkdauer buchen sowie den Parkplatz ein- und auschecken und die Zahlung vornehmen kann;
das besagte Parkplatz-Feldterminal (52) ist so ausgelegt, dass es die Planargrafik des Parkplatzzustands sowie die Parkplatzinformationen, die Parkplatzzustandsinformationen, die Parkplatzreservierungsinformationen und die Parkinformationen aller Parkplätze im Parkhaus darstellt, damit der Fahrer die Parkdauer buchen sowie den Parkplatz ein- und auschecken und die Zahlung vornehmen kann.

3. Parkraumservice- und -managementsystem auf der Grundlage von Parkraumzustandsinformationen nach Anspruch 1 oder Anspruch 2, **gekennzeichnet durch**:
wobei das Überwachungsterminal (2) ein PC-Überwachungsterminal und ein APP-Überwachungsterminal mit Kamerafunktion umfasst;
wobei das PC-Überwachungsterminal so ausgelegt ist, dass es ein ebenes Parkdiagramm des Parkplatzes und dynamische Informationen über die Einfahrt und Ausfahrt von Fahrzeugen in den und aus dem Parkplatz anzeigt; wobei die dynamischen Informationen über die Einfahrt und Ausfahrt von Fahrzeugen mindestens den Parkplatzcode, das Fahrzeugkennzeichen, die geplante Start-/Endzeit des Parkens, die tatsächliche Start-/Endzeit des Parkens, die Einfahrt oder Ausfahrt, das Einchecken oder Auschecken des Parkplatzes, die Art der Änderung und die Zeit, die Neuzuweisung des Parkplatzes und die entsprechenden Informationen über den Zustand des Parkplatzes umfassen; dynamische Informationen über die Einfahrt und Ausfahrt von Fahrzeugen, die die Zeit als Hauptachse nehmen, wobei aktuelle Informationen vor historischen Informationen und anormale Informationen vor normalen Informationen liegen; wobei das APP-Überwachungsterminal so angepasst ist, dass es ein planares Diagramm des Parkraumzustands anzeigt und eine Navigation für die Überwachungsperson bereitstellt, und ferner so angepasst ist, dass es eine Parkraumverwaltung durchführt, Beweise sammelt und Beschwerden vorbringt und Parkplätze im Namen von Kunden bucht, ein- und auscheckt und Zahlungen annimmt sowie Beweise für Fahrzeuge, die gegen die Vorschriften verstoßen, sammelt und sie an das Parkdurchsetzungsterminal (6) meldet;
wobei das Treiberterminal (3) ein PC-Treiberterminal und ein APP-Treiberterminal mit Kamerafunktion umfasst;
wobei das PC-Fahrerterminal so beschaffen ist, dass es die planare Grafik des Parkraumzustands anzeigt, wobei das APP-Fahrerterminal so beschaffen ist, dass es die planare Grafik des Parkraumzustands anzeigt und eine Navigation für den Fahrer bereitstellt, und ferner so beschaffen ist, dass es Beweise sammelt und Beschwerden vorbringt, einen Parkplatz vor Ort bucht, eine Zahlung vornimmt, den Parkplatz eincheckt und auscheckt;
wobei das Parkkontrollgerät (6) ein PC-Parkkontrollgerät und ein APP-Parkkontrollgerät mit Kamerafunktion umfasst;
wobei der PC-Parkdurchsetzungsterminal so ausgelegt ist, dass er ein planares Diagramm des Parkraumzustands anzeigt; wobei derAPP-Parkdurchsetzungsterminal ferner so ausgelegt ist, dass er das planare Diagramm des Parkraumzustands anzeigt und eine Navigation für den Durchsetzungsbeamten bereitstellt, um eine Beweiserfassung und Durchsetzung vor Ort zu erreichen.

4. Verfahren zur Parkraumbedienung und -verwaltung unter Verwendung eines Systems nach einem der Ansprüche 1 bis 3, **gekennzeichnet durch** die folgenden Schritte:
1.1 Veröffentlichung von Informationen über Parkplätze,
die Aufsichtsperson oder der Eigentümer des Parkplatzes veröffentlicht die Parkplatzinformationen auf dem Cloud-Server (1) unter Verwendung des Aufsichtsterminals (2);
die besagten Parkplatzinformationen, die zumindest den Parkplatzcode, die Abmessungen des Parkplatzes, die verfügbare Zeit und die Begrenzung der Parkdauer umfassen;
1.2 Erwerb von Informationen über die Reservierung von Parkplätzen,
der Fahrer die Parkplatzbedarfsinformationen mit Hilfe des Fahrerterminals (3) auf den Cloud-Server (1) hochlädt; wobei die genannten Parkplatzbedarfsinformationen mindestens den Namen des Ziels, das Fahrzeugkennzeichen, die Parkbeginnzeit und die Parkdauer enthalten; der Cloud-Server (1) die empfangenen Parkplatzbedarfsinformationen mit den Parkplatzinformationen abgleicht; Rückmeldung der erfolgreich abgeglichenen Parkplätze, die dem Fahrer durch das Fahrerterminal (3) zur Verfügung gestellt wird; der Fahrer wählt einen anwendbaren Parkplatz durch das Fahrerterminal (3) aus und bestätigt eine Reservierung; dann aktualisiert der Cloud-Server (1) die Parkplatzreservierungsinformationen für das Überwachungsterminal (2) bzw. das Fahrerterminal (3);
die besagte Parkplatzreservierungsinformation, die mindestens den Parkplatzcode, das Fahrzeugkennzeichen, die Parkbeginnzeit und die Parkdauer enthält;
1.3 Erkennung des Belegungszustands von Parkplätzen,
mit der Einfahrt oder Ausfahrt des Fahrzeugs in den oder aus dem Parkplatz, wobei das Fahrzeugerkennungsmodul (4), das sich in dem Parkplatz befindet, die Änderung des Belegungszustands des Parkplatzes erkennt; das Fahrzeugerkennungsmodul (4) überträgt die Belegungszustandsinformationen des Parkplatzes an das Überwachungsterminal (2), das Fahrerterminal (3) bzw. den Cloud-Server (1);
1.3.1 wobei, wenn der Parkplatz besetzt ist, wie durch das Fahrzeugerkennungsmodul (4) erkannt, dann der Parkplatzbelegungszustand Parkplatz besetzt ist; wobei der Cloud-Server (1) drei Arten der Parkplatzzustände erzeugt, nämlich: normale Belegung, Belegung ohne Einchecken und Belegung ohne Auschecken, gemäß der Belegungszustandsinformation des Parkplatzes, der Parkplatzinformation, der Parkplatzreservierungsinformation und der Parkplatzinformation;
die besagten Parkinformationen umfassen mindestens den Parkplatzcode, das Fahrzeugkennzeichen und die Zeit für das Einchecken des Parkplatzes und/oder das Auschecken des Parkplatzes;
1.3.2 wobei, wenn der Parkplatz von dem Fahrzeugerkennungsmodul (4) als frei erkannt wird, der Parkplatzbelegungszustand ein freier Parkplatz ist; wobei der Cloud-Server (1) vier Arten von Parkplatzzuständen erzeugt, nämlich: freier Parkplatz, reservierter Parkplatz, freier Parkplatz ohne Abmeldung und fehlerhafter Parkplatz gemäß der Belegungszustandsinformation des Parkplatzes, der Parkplatzinformation, der Parkplatzreservierungsinformation und der Parkplatzinformation;
1.4 alle Parkplätze im Parkhaus mit Text oder grafischem Zeichen und Farbe markiert und auf dem elektronischen Kartenmodul (7) des Überwachungs-Terminals (2), des Fahrer-Terminals (3) und der Feld-Terminal-Komponente (5) entsprechend den Parkraumzuständen in den Schritten 1.3.1 und 1.3.2 dargestellt werden; die Fahrer die Parkplätze mit Hilfe des Fahrer-Terminals (3) buchen, einchecken und auschecken; und die Überwachungsbeamten die Parkplätze mit Hilfe des Überwachungs-Terminals (2) verwalten.

5. Verfahren zur Parkraumbetreuung und -verwaltung auf der Grundlage von Parkraumzustandsinformationen nach Anspruch 4, **gekennzeichnet durch**:
die Fahrer, die über das Fahrerterminal (3) eine Störung melden oder sich beschweren; die Aufsichtspersonen, die über das Aufsichtsterminal (2) eine Rundgangskontrolle durchführen, Nachweise sammeln, den Parkraum verwalten oder die Parkraumzustandsinformationen anpassen;
die detaillierten Arbeitsabläufe für das Einchecken des Parkplatzes nach dem genannten Schritt 1.3.1 sind wie folgt:
bei der Einfahrt des Fahrzeugs in den Parkplatz empfängt das Fahrerterminal (3) die vom Fahrzeugerkennungsmodul (4) in Schritt 1 übertragene Information über den Belegungszustand des Parkplatzes.3 übertragenen Belegungszustandsinformationen des Parkplatzes; das Fahrerterminal (3) sendet eine Begrüßungsnachricht an den Fahrer, zeigt den Parkplatzcode an und fordert den Fahrer auf, in den Parkplatz einzuchecken; wenn der Fahrer das Einchecken in den Parkplatz bestätigt, überträgt das Fahrerterminal (3) Eincheckinformationen an den Cloud-Server (1), der die Informationen empfängt und vergleicht; bei erfolgreichem Vergleich verknüpft der Cloud-Server (1) das Fahrzeugkennzeichen und den Parkplatzcode, zeichnet die Zeit für das Einchecken in den Parkplatz auf und gibt eine Rückmeldung über das erfolgreiche Einchecken in den Parkplatz an das Überwachungsterminal (2) und das Fahrerterminal (3); wobei die Eincheckinformationen mindestens den Parkplatzcode, das Fahrzeugkennzeichen, die Zeit für das Einchecken in den Parkplatz, die geplante Parkendzeit und die Parkdauer enthalten;
die detaillierten Arbeitsabläufe für die Abmeldung des Parkplatzes nach dem genannten Schritt 1.3.2 sind wie folgt:
vor der Ausfahrt des Fahrzeugs aus dem Parkplatz der Fahrer zunächst den Parkplatz unter Verwendung des Fahrerterminals (3) auscheckt; das Fahrerterminal (3) Auscheckinformationen an den Cloud-Server (1) überträgt, der die Informationen empfängt und vergleicht; bei erfolgreichem Vergleich der Cloud-Server (1) die Bindung des Fahrzeugkennzeichens und des Parkplatzcodes aufhebt, die Zeit für das Auschecken des Parkplatzes aufzeichnet und eine Rückmeldung der Bestätigungsinformationen für das Auschecken des Parkplatzes an das Aufsichtsterminal (2) und das Fahrerterminal (3) liefert; wenn das Fahrzeug den Parkplatz verlässt, wird die Änderung der Belegungszustandsinformation des Parkplatzes durch das Fahrzeugerkennungsmodul (4) erkannt und an den Cloud-Server (1) durch das Cloud-Kommunikationsmodul übertragen; der Cloud-Server (1) liefert eine Rückmeldung der Information für ein erfolgreiches Auschecken des Parkplatzes an das Aufsichtsterminal (2) und das Fahrerterminal (3); wobei die oben erwähnte Auscheckinformation mindestens den Parkplatzcode, das Fahrzeugkennzeichen und die Zeit für das Auschecken des Parkplatzes enthält.

6. Verfahren zur Parkraumbetreuung und -verwaltung auf der Grundlage von Parkraumzustandsinformationen nach Anspruch 5, **gekennzeichnet durch**:
Einchecken von Parkplätzen im besagten Schritt 1.2 unter Verwendung der Feldterminalkomponente (5), wobei die einzelnen Arbeitsschritte wie folgt ablaufen:
A. park-now,
wenn die Parkraumzustandsinformationen auf der Feldterminalkomponente (5) angezeigt werden, der Fahrer die Parkdauer und das Fahrzeugkennzeichen an die Feldterminalkomponente (5) unter Verwendung des Fahrerterminals (3) überträgt und einen verfügbaren Parkplatz über die Feldterminalkomponente (5) auswählt, um in den Parkplatz einzuchecken; die Feldterminalkomponente (5) die Informationen für das Einchecken des Parkplatzes an den Cloud-Server (1), das Überwachungsterminal (2) bzw. das entsprechende Fahrerterminal (3) überträgt; nach dem Empfangen der Information für das Einchecken des Parkplatzes bindet der Cloud-Server (1) das entsprechende Fahrzeugkennzeichen und den Parkplatzcode, zeichnet die Zeit für das Einchecken des Parkplatzes auf, gibt eine Rückmeldung über die Information für das erfolgreiche Einchecken des Parkplatzes an das Aufsichtsterminal (2) und das Fahrerterminal (3); wobei der Zustand des Parkplatzes in Übereinstimmung mit der Eincheckinformation dargestellt wird;
B. reservierte Parkplätze,
wenn der Fahrer über das Fahrerterminal (3) Parkraumreservierungsinformationen an die Feldterminalkomponente (5) übermittelt, vergleicht die Feldterminalkomponente (5) die Parkraumreservierungsinformationen mit der aktuellen Zeit; wenn der Vergleich übereinstimmt, überträgt die Feldterminalkomponente (5) Informationen für das Einchecken des Parkplatzes an den Cloud-Server (1), das Supervisor-Terminal (2) bzw. das Fahrerterminal (3), wobei der Cloud-Server (1) das entsprechende Fahrzeugkennzeichen und den Parkplatzcode verknüpft, die Zeit für das Einchecken des Parkplatzes aufzeichnet und eine Rückmeldung der Informationen für das erfolgreiche Einchecken des Parkplatzes an den Supervisor liefert
Terminal (2) und dem Fahrerterminal (3); der Zustand des Parkplatzes wird in Übereinstimmung mit der Check-in-Information dargestellt;
die Abfertigung der Parkplätze in Schritt 1.3.2 wird mit Hilfe der Feldterminal-Komponente (5) durchgeführt, wobei die einzelnen Bedienschritte wie folgt aussehen:
der Fahrer überträgt die Abmeldeinformationen an die Feldterminalkomponente (5) unter Verwendung des Fahrerterminals (3); die Feldterminalkomponente (5) überträgt an den Cloud-Server (1), das Überwachungsterminal (2) und das Fahrerterminal (3) jeweils Bestätigungsinformationen für die Abmeldung des Parkplatzes; wenn das Fahrzeug den Parkplatz verlässt, wird die Änderung der Parkplatzbelegungsinformationen durch das Fahrzeugerkennungsmodul (4) erkannt und an den Cloud-Server (1) durch das Cloud-Kommunikationsmodul übertragen; der Cloud-Server (1) die Informationen zum Auschecken des Parkplatzes an das Aufsichtsterminal (2) und das Fahrerterminal (3) überträgt; der Cloud-Server (1) die Bindung des entsprechenden Fahrzeugkennzeichens und des Parkplatzcodes aufhebt, die Zeit für das Auschecken des Parkplatzes aufzeichnet und eine Rückmeldung der Informationen für das erfolgreiche Auschecken des Parkplatzes an das Aufsichtsterminal (2) liefert; wobei der Zustand des Parkplatzes in Übereinstimmung mit den Informationen für das erfolgreiche Auschecken dargestellt wird;
das besagte Fahrerterminal (3) überträgt über die Feldterminalkomponente (5) Meldungen und Beschwerden, einschließlich der Störung des Parkplatzes und der anormalen Belegung des Parkplatzes;
das besagte Überwachungs-Terminal (2) verwaltet die Parkplätze vor Ort durch die Feld-Terminal-Komponente (5) und durch die Kontrolle der Touren, einschließlich der Nichtverfügbarkeit des Parkplatzes, der anormalen Belegung des Parkplatzes und, falls erforderlich, des Ein- und Auscheckens des Parkplatzes im Namen des Fahrers;
der besagte Parkvollstreckungsterminal (6), der die Durchsetzung vor Ort durch die Feldterminalkomponente (5) und durch eine Rundgangskontrolle durchführt, einschließlich der Ausstellung eines Tickets und der Durchsetzung eines Verstoßes.

7. Verfahren zur Parkraumbetreuung und -verwaltung auf der Grundlage von Parkraumzustandsinformationen nach Anspruch 6, **gekennzeichnet durch**:
das besagte Feldterminal-Bauteil (5) umfasst das Parkplatz-Feldterminal (51);
für einen Fahrer ohne Fahrerterminal (3), wobei das Verfahren zum Einparken die folgenden Schritte umfasst:
Parken des Fahrzeugs auf einem verfügbaren Parkplatz entsprechend dem vom Parkplatz-Feldterminal (51) präsentierten Parkplatzstatus; und Eingeben der Parkdauer und des Fahrzeugkennzeichens über das Parkplatz-Feldterminal (51), um den Parkplatz einzuchecken und die erforderliche Zahlung vorzunehmen; wobei der Parkraumzustand nach erfolgreichem Einchecken des Parkplatzes in Übereinstimmung mit der Eincheckinformation dargestellt wird; am Ende des Parkens, zuerst Auschecken des Parkplatzes durch das Parkraumfeldterminal (51) und dann Entfernen des Fahrzeugs von dem entsprechenden Parkplatz, wobei der Parkraumzustand nach erfolgreichem Auschecken des Parkplatzes in Übereinstimmung mit der Tatsache des Parkplatzes dargestellt wird;
für die Aufsichtsperson unter Verwendung des Parkraum-Feldterminals (51), ein Verfahren zur Parkraumbewirtschaftung, das die folgenden Schritte umfasst:
Prüfen von Parkplätzen auf abnormale Belegung entsprechend dem auf dem Parkraum-Feldterminal (51) dargestellten Parkraumzustand und Eingeben des Fahrzeugkennzeichens und der abnormalen Tatsache über das Parkraum-Feldterminal (51), Aufzeichnen und Verwalten der Abnormalität;
für den Parkraumüberwachungsbeamten unter Verwendung des Parkraum-Feldterminals (51), wobei das Verfahren zur Parkraumbewirtschaftung die folgenden Schritte umfasst:
Prüfen von Parkplätzen auf abnormale Belegung entsprechend dem auf dem Parkraumfeld-Terminal (51) dargestellten Parkraumzustand; Eingeben des Fahrzeugkennzeichens und der abnormalen Tatsache über das Parkraumfeld-Terminal (51); Aufzeichnen und Verwalten der Abnormität.

8. Verfahren zur Parkraumbetreuung und -verwaltung auf der Grundlage von Parkraumzustandsinformationen nach Anspruch 6, **gekennzeichnet durch**:
das besagte Feldterminal (5) umfasst das Parkplatz-Feldterminal (52);
für einen Fahrer ohne Fahrerterminal (3), wobei das Einparkverfahren die folgenden Schritte umfasst:
nach der Einfahrt des Fahrzeugs in den Parkplatz prüft und wählt der Fahrer den verfügbaren Parkplatz aus, parkt das Fahrzeug und zeichnet den Parkplatzcode auf, und gibt dann den Parkplatzcode, das Fahrzeugkennzeichen und die Parkdauer über das Parkfeldterminal (52) ein, um einzuchecken und die Zahlung wie erforderlich vorzunehmen; der Zustand des Parkplatzes wird nach erfolgreichem Einchecken des Parkplatzes in Übereinstimmung mit der EincheckInformation dargestellt; am Ende des Parkens wird der Parkplatz-Code in das Parkplatz-Feldterminal (52) eingegeben, um den Parkplatz auszuchecken; der Zustand des Parkplatzes wird nach erfolgreichem Auschecken des Parkplatzes in Übereinstimmung mit der Tatsache des Parkplatzes dargestellt;
für die Aufsichtsperson durch Verwendung des Parkplatz-Feldterminals (52), wobei das Verfahren zur Parkraumbewirtschaftung die folgenden Schritte umfasst:
Prüfen von Parkplätzen auf abnormale Belegung entsprechend dem auf dem Parkplatz-Feldterminal (52) dargestellten Parkplatzzustand; Eingeben des Fahrzeugkennzeichens und der abnormalen Tatsache über das Parkplatz-Feldterminal (52), Aufzeichnen und Verwalten der Abnormalität.

9. Verfahren zur Parkraumbedienung und -verwaltung auf der Grundlage von Parkraumzustandsinformationen nach einem der Ansprüche 4 bis 8, **gekennzeichnet durch**:
wenn das besagte Fahrzeug nicht eingecheckt ist oder es versäumt hat, auf dem Parkplatz einzuchecken, fehlt das Fahrzeugkennzeichen bei der Belegung ohne Einchecken; bei längerem Stehen und nach dem Auschecken aus dem Parkplatz ist das Fahrzeugkennzeichen das des entsprechenden Fahrzeugs;
der besagte Zustand des Parkplatzes beinhaltet auch den nicht verfügbaren Parkplatz und den befragten Parkplatz;
der besagte Parkplatz ist nicht verfügbar, d.h. es handelt sich um einen Parkplatz, der nicht gebucht und geparkt werden kann;
der besagte Parkplatz-Antworter bedeutet einen Parkplatz in einem Anhörungsverfahren für eine anormale Beschwerde; die Information für den Parkplatz-Antworter wird in einem Suchergebnis und bei der Buchung abgeschirmt, ohne von den Fahrern gebucht zu werden.

10. Verfahren zur Parkraumbetreuung und -verwaltung auf der Grundlage von Parkraumzustandsinformationen nach Anspruch 9, **gekennzeichnet durch**:
aus der Information über den Zustand des Parkplatzes im genannten Schritt 1.3, wobei Parkplätze mit Belegung ohne Einchecken, Belegung ohne Auschecken, Leerstand ohne Auschecken und die Parkraumstörung allesamt anormale Zustände sind; und der Cloud-Server (1) eine Rückmeldung der Informationen für die oben erwähnten vier Arten von abnormalen Parkraumzuständen an die Aufsichtsperson über das Aufsichtsterminal (2) liefert, wobei die Aufsichtsperson die entsprechenden Parkplätze durch Navigation unter Verwendung des Parkraumcodes und des planaren Graphen von Parkraumzuständen des elektronischen Kartenmoduls (7) verwaltet, die Parkraumzustandsinformationen in Übereinstimmung mit dem aktuellen Zustand eines Parkplatzes anpasst und die Verarbeitungsergebnisse an den Cloud-Server (1) bzw. das Fahrerterminal (3) verteilt;
ein Fahrer, der mit Hilfe des Fahrerterminals (3) Beweise für einen anormalen Zustand eines Parkplatzes sammelt und dies dem Überwachungs-Terminal (2) meldet oder mit den gesammelten Beweisen Beschwerden an das Parkkontrollterminal (6) richtet;
die Aufsichtsperson, die die Parkplätze mit einem abnormalen Zustand unter Verwendung des Aufsichtsterminals (2) verwaltet, die Parkraumzustandsinformationen mit dem tatsächlichen Zustand des Parkplatzes in Einklang bringt, Beweise für den abnormalen Zustand des Parkplatzes sammelt und dem Parkdurchsetzungsterminal (6) mit den gesammelten Beweisen Bericht erstattet;
der Parkraumüberwachungs-Terminal (6), der auffällige Beschwerden bearbeitet, zusätzlich Beweise vor Ort sammelt und die Auffälligkeiten bearbeitet; schließlich werden die Bearbeitungsergebnisse an den Cloud-Server (1), den entsprechenden Überwachungs-Terminal (2) bzw. Fahrer-Terminal (3) übertragen;
der besagte Fahrzeugbeklagte zum Zeitpunkt der Buchung und des Eincheckens des Parkplatzes weder einen Parkplatz buchen noch jetzt parken darf.

## Revendications

1. Système de gestion et de service des places de stationnement qui affiche des informations sur l'état des places de stationnement. Ses caractéristiques sont les suivantes que:
ledit système de service and de gestion des places de stationnement comprennent un serveur en nuage (1), et un terminal de surveillance (2), un terminal de conducteur (3), un module de détection de véhicule (4), un composant de terminal sur place (5) et un terminal de contrôle de stationnement (6) connectés par signal au serveur en nuage (1) ; ledit terminal de surveillance (2), le terminal de conducteur (3), le composant de terminal sur place (5) et le terminal de contrôle de stationnement (6) sont tous intégrés avec un module de carte électronique (7) connecté au serveur en nuage (1) par signal;
ledit terminal de surveillance (2) est connecté par un signal avec le terminal de conducteur (3), et à la fois le terminal de surveillance (2) et le terminal de conducteur (3) sont connectés par un signal au module de détection de véhicule (4), au composant de terminal sur place (5) et au terminal de contrôle de stationnement (6) ;
ledit serveur en nuage (1) est utilisé pour recevoir, stocker, traiter et mettre à jour toutes les informations relatives au parking et aux véhicules ;
ledit terminal de surveillance (2) est pris de télécharger les informations relatives à la place de stationnement vers le serveur en nuage (1), de surveiller l'état anormal de la place de stationnement, de notifier le superviseur pour une gestion opportune, et également d'aider le conducteur à réserver des places de stationnement, à modifier et à annuler des places de stationnement, à enregistrer et libérer des places de stationnement ;
les informations sur ledit place de stationnement comprennent au moins le code de la place de stationnement, la dimension de la place de stationnement, une période disponible et la limite de durée du stationnement ;
les informations sur ledit place de stationnement comprennent également des informations telles que le fait de savoir si la place de stationnement est dédiée au stationnement autorisé, si elle est utilisée pour un stationnement temporaire, si elle est une place de stationnement rechargeable et si elle est utilisée pour un stationnement automatique,
une place de stationnement spécifique au stationnement autorisé désigne une place de stationnement qui accepte les réservations et le stationnement dans des conditions autorisées,
la place de stationnement temporaire fait référence à la place de stationnement limitée au stationnement. Lorsque la limite de temps de stationnement expire, la place de stationnement doit être vérifiée. S'il y a des véhicules, ils doivent être déplacés hors de la place de stationnement. La place de stationnement temporaire peut être limité par les conditions d'autorisation,
la place de stationnement rechargeable signifie une place de stationnement équipé d'un équipement d'alimentation électrique EV pour la recharge du bloc-batterie d'un véhicule électrique ou l'alimentation électrique auxiliaire d'un équipement électrique embarqué, et
la place de stationnement pour le stationnement automatique désigne la place de stationnement avec l'infrastructure pour le stationnement automatique des véhicules avec un système de stationnement auxiliaire automatique ou semi-automatique ou un système de conduite automatique ;
ledit terminal de conducteur (3) peut envoyer des informations de demande de place de stationnement au serveur en nuage (1) pour réserver et modifier des places de stationnement, et peut également envoyer des informations d'enregistrement et des informations de facturation au serveur en nuage (1) des places de stationnement ; les informations de demande de place de stationnement comprennent au moins le nom de la destination, le numéro de plaque d'immatriculation du véhicule, l'heure de début de stationnement et la durée de stationnement ;
ledit module de détection de véhicule (4) est utilisé pour détecter le statut d'occupation de la place de stationnement, c'est-à-dire pour juger si la place de stationnement est occupé, et/ou, s'il y a un véhicule garé sur la palce de stationnement, il peut identifier automatiquement le numéro de plaque d'immatriculation du véhicule, exporter les informations d'occupation de la place de stationnement au serveur en nuage (1), au terminal de surveillance (2), et au terminal de conducteur (3) ;
ledit serveur en nuage (1) est adapté aux sept types de places de stationnement suivants, à savoir l'occupation normale, l'occupation de véhicules non enregistrés, l'occupation de véhicules non réclamés, les places de stationnement disponibles, les places de stationnement réservées, les places de stationnement libres non réglées et les places de stationnement défectueuses. Les informations sur l'état des places de stationnement pouvent être mises à jour ;
les informations de ledit place de stationnement comprennent au moins le code de la place de stationnement, le numéro de la plaque d'immatriculation du véhicule (s'il est identifié) et l'heure de l'enregistrement et du départ,
l'occupation normale signifie que le véhicule correspondant a enregistré avec succès une place de stationnement et dans la limite de la durée de stationnement de la place de stationnement enregistrée.
l'occupation non enregistrés signifie que la place de stationnement n'a pas été enregistrée ou n'a pas été enregistrée avec succès, et que le véhicule correspondant se trouve sur l'emplacement de stationnement après avoir effectué les formalités de sortie sur la place de stationnement,
les places de stationnement disponibles désignent les places de stationnement correspondantes disponibles pour la réservation et le stationnement,
la place de stationnement réservé signifie que la place de stationnement correspondant réservé est uniquement utilisé pour le stationnement des véhicules correspondants,
la place de stationnement libre non réglée signifie que le véhicule non réglé est sorti ou que la place de stationnement n'a pas été réglée,
l'occupation non réglé signifie que les véhicules correspondants restent toujours sur la place de stationnement après avoir dépassé la limite de temps de stationnement lors de l'enregistrement réussi, et
la place de stationnement défectueuse signifie que la place de stationnement est indisponible pour des raisons physiques ;
la fonction de ledit serveur en nuage (1) est de synchroniser les informations sur la place de stationnement et les informations sur l'état de chaque place de stationnement, ainsi que les informations sur la réservation de la place de stationnement et les informations sur le stationnement correspondant au stationnement sur la place de stationnement, et de transférer ces informations au module de carte électronique (7) ; La fonction du module de carte électronique (7) est de recevoir les informations envoyées par le serveur en nuage (1), qui sont présentées sous la forme de textes ou de symboles graphiques et de couleurs par l'intermédiaire du terminal de surveillance (2), du terminal de conducteur (3), des composants de terminal sur place (5) et du terminal de contrôle de stationnement (6) ;
ledit module de carte électronique (7) comprend une vue en plan de l'état de la place de stationnement avec une fonction de navigation ; La vue en plan de l'état de la place de stationnement comprend des informations sur la place de stationnement et son état, à savoir lequel des sept états de la place de stationnement s'applique à des places de stationnement particuliers, les informations de réservation de la place de stationnement et les informations de stationnement de tous les places de stationnement dans le parking ; et
ledit terminal de contrôle de stationnement (6) est adapté pour surveiller le stationnement illégal.

2. Système de gestion et de service de places de stationnement basé sur des informations d'état de places de stationnement selon la revendication 1, caractérisé également par :
ledit serveur en nuage (1) étant également utilisé pour recevoir, stocker, traiter et mettre à jour des informations de transaction et des messages de battement de coeur ; Les informations de parking comprenant au moins les informations de place de stationnement et les informations d'état de place de stationnement du même parking ;
Ledit information sur l'état de la place de stationnement étant sauvegardée selon le code de la place de stationnement, qui comprend au moins le code de la place de stationnement, l'état de la place de stationnement et l'heure de changement d'état ; l'état de la place de stationnement comprenant également l'indisponibilité de la place de stationnement et la réponse à la place de stationnement ; l'information sur le véhicule comprenant au moins le numéro de plaque d'immatriculation du véhicule, l'information sur la demande de place de stationnement, l'information sur la réservation de la place de stationnement, l'information sur le stationnement et les répondants du véhicule fournis sous la forme du numéro de plaque d'immatriculation du véhicule ; Les informations relatives à la réservation de la place de stationnement comprenant au moins le code de la place de stationnement réservée, le numéro de la plaque d'immatriculation du véhicule, l'heure prévue du début du stationnement et la durée du stationnement ; Lesdites informations relatives au stationnement comprenant au moins le numéro de la plaque d'immatriculation du véhicule et le code de la place de stationnement, ainsi que l'heure d'enregistrement et/ou l'heure de départ de la place de stationnement ; L'enregistrement de la place de stationnement faisant référence au rapport ou à l'action par laquelle le conducteur exprime son intention de stationner, accepte les termes et conditions du service et de la gestion du stationnement, et confirme le début du stationnement; Ledit règlement de la place de stationnement faisant référence au rapport ou à l'action par laquelle le conducteur confirme le fait de stationnement, accepte les termes et conditions du service de stationnement et de la gestion, et confirme la fin du stationnement ; Le véhicule mis en cause étant le véhicule pour lequel la plainte inhabituelle est entendue ;
ledit terminal de surveillance (2) pouvant en outre aider les conducteurs à percevoir les frais, à collecter les états anormaux des places de stationnement et à les distribuer au terminal de conducteur (3) pour la gestion ou au terminal de contrôle de stationnement (6) pour l'accusation; Le superviseur pouvant vérifier les informations d'état de la place de stationnement dans le parking par l'intermédiaire du module de carte électronique (7) du terminal de surveillance (2), localiser selon le module de carte électronique, et naviguer vers la place de stationnement correspondante ; Le serveur en nuage (1) étant adapté pour synchroniser les informations d'état de la place de stationnement, les informations de réservation de la place de stationnement et les informations de transaction et transmettre les informations au terminal de surveillance (2) ;
ledit terminal de conducteur (3) étant en outre adapté pour effectuer un paiement et prolonger la durée de stationnement, ainsi que pour collecter des situations d'un état anormal de la place de stationnement et pour les distribuer au terminal de surveillance (2) pour un rapport et une plainte, ou au terminal d'application de stationnement (6) pour une accusation, le conducteur étant capable de vérifier les informations d'état de la place de stationnement dans le parking par le module de carte électronique (7) du terminal de conducteur (3), et de naviguer vers la place de stationnement correspondant selon le positionnement et la navigation du module de carte électronique (7) ; le serveur en nuage (1) synchronisant les informations de demande de place de stationnement, les informations de réservation de place de stationnement, les informations d'entrée et de sortie, les informations de stationnement et les informations de transaction avec le terminal de conducteur (3) ;
le terminal de contrôle de stationnement (6) étant adapté pour vérifier les informations de stationnement de tout place de stationnement, collecter des informations, enregistrer et appliquer un véhicule illégal en comparant les informations de stationnement avec les informations de stationnement réel du véhicule ; un agent d'application étant capable de vérifier les informations anormales de la place de stationnement dans le parking par le module de carte électronique (7) du terminal de contrôle de stationnement (6) et de naviguer vers la place de stationnement correspondant selon le positionnement et la navigation du module de carte électronique (7); le terminal de contrôle de stationnement (6) étant en outre adapté pour recevoir, stocker et traiter des informations de plainte ou d'accusation provenant du terminal de surveillance (2) et du terminal de conducteur (3), et pour faire respecter un véhicule illégal après avoir vérifié les informations de plainte ou d'accusation ;
ledit composant terminal de terrain (5) comprenant un terminal de stationnement sur place(51) et un terminal de parking sur place(52) ; ledit terminal de stationnement sur place (51) et le terminal de parking sur place (52) comprenant tous deux un afficheur, et un module de communication, un module de paiement et une interface homme-machine connectés à l'afficheur, le module de paiement étant connecté au module de communication et à l'interface homme-machine; ledit afficheur étant adapté pour donner les informations de place de stationnement, les informations d'état de place de stationnement et les informations de stationnement de la place de stationnement correspondante sous forme de texte, de graphique et/ou de signal acousto-optique ;
ledit module de communication étant connecté par signal au serveur en nuage (1), au terminal de surveillance (2), au terminal de conducteur (3) et au terminal de contrôle de stationnement (6) respectivement ; le serveur en nuage (1) étant adapté pour synchroniser les informations de place de stationnement, les informations d'état de place de stationnement, les informations de stationnement et les informations de réservation correspondant à toutes les places de stationnement dans le parking et pour transmettre les informations au terminal de parking sur place (52) ; le serveur en nuage (1) étant adapté pour synchroniser les informations de place de stationnement, les informations d'état de place de stationnement, les informations de stationnement et les informations de réservation correspondant à la place de stationnement et pour les transmettre au terminal de stationnement sur place (51) ;
ledit terminal de stationnement sur place (51) étant adapté pour présenter les informations de place de stationnement correspondantes, les informations d'état de place de stationnement, les informations de réservation de place de stationnement et les informations de stationnement, pour que le conducteur puisse réserver la durée de stationnement, ainsi qu'enregistrer, libérer et payer la place de stationnement ;
ledit terminal de parking sur place (52) étant adapté pour présenter une vue en plan de l'état de la place de stationnement, ainsi que les informations sur la place de stationnement, les informations sur l'état de la place de stationnement, les informations sur la réservation et les informations sur le stationnement de tous les places de stationnement dans le parking, pour que le conducteur puisse réserver la durée du stationnement, ainsi qu'enregistrer, libérer et payer la place de stationnement.

3. Système de gestion et de service de places de stationnement basé sur des informations d'état de places de stationnement selon la revendication 1 ou la revendication 2, caractérisé également par :
Ledit terminal de surveillance (2) comprenant un terminal de superviseur PC et un terminal de superviseur APP avec une fonction de caméra ;
Ledit terminal de surveillance PC étant adapté pour afficher une vue en plan de parking et des informations dynamiques d'entrée et de sortie de véhicule du parking ; lesdites informations dynamiques d'entrée et de sortie de véhicule comprenant au moins le code de place de stationnement, le numéro de plaque d'immatriculation du véhicule, l'heure de début/fin de parking programmée, l'heure de début/fin de parking réelle, l'entrée ou la sortie, l'enregistrement ou le retrait de la place de stationnement, le type de modification et l'heure, la réaffectation de place de stationnement et les informations d'état de place de stationnement correspondante ; des informations dynamiques d'entrée et de sortie de véhicule prenant le temps comme axe principal, avec des informations actuelles précédant les informations historiques, et des informations anormales précédant les informations normales ; le terminal de surveillance APP étant adapté pour afficher une vue en plan de l'état de la place de stationnement et pour fournir une navigation au superviseur, et étant en outre adapté pour réaliser la gestion de la place de stationnement, collecter des informations et déposer des plaintes, et pour réserver, enregistrer et libérer des places de stationnement pour le compte de clients et accepter le paiement, ainsi que pour collecter des informations de véhicules en infraction et les signaler au terminal de contrôle de stationnement (6) ;
ledit terminal de conducteur(3) comprenant un terminal de conducteur PC et un terminal de conducteur APP avec une fonction de caméra ;
ledit terminal de conducteur PC étant adapté pour afficher la vue en plan de l'état de la place de stationnement, le terminal de conducteur APP étant adapté pour afficher la vue en plan de l'état de la place de stationnement et fournir une navigation pour le conducteur, et étant en outre adapté pour collecter des informations et déposer des plaintes, réserver une place de stationnement sur site, effectuer un paiement, enregistrer et libérer la place de stationnement ;
ledit terminal de contrôle de stationnement (6) comprenant un terminal de contrôle de stationnement PC et un terminal de contrôle de stationnement APP avec une fonction de caméra ;
ledit terminal de contrôle de stationnement PC étant adapté pour afficher une vue en plan de l'état dela place de stationnement ; le terminal de contrôle de stationnement APP étant en outre adapté pour afficher une vue en plan de l'état de la place de stationnement et fournir une navigation à l'agent pour réaliser une collecte de informations et une application sur site.

4. Méthode de service et de gestion des places de stationnement utilisant un système basé sur l'une quelconque des revendications 1 à 3, **caractérisé par**:
1.1 la publication d'informations sur les places de stationnement,
le superviseur ou le propriétaire de la place de stationnement publie les informations relatives à la place de stationnement sur le serveur en nuage (1) à l'aide du terminal de surveillance (2) ;
lesdites informations sur la place de stationnement comprenant au moins le code de la place de stationnement, les dimensions de la place de stationnement, la période disponible et la limite de la durée de stationnement ;
1.2 l'acquisition d'informations sur la réservation de places de stationnement,
le conducteur téléchargeant les informations de demande de place de stationnement vers le serveur en nuage (1) par le terminal du conducteur (3) ; lesdites informations de demande de place de stationnement comprenant au moins le nom de la destination, le numéro de plaque d'immatriculation du véhicule, l'heure de début du stationnement et la durée du stationnement ; le serveur en nuage (1) faisant correspondre les informations de demande de place de stationnement telles que reçues avec les informations de place de stationnement ; un retour d'information sur les places de stationnement correspondant avec succès étant fourni au conducteur par le terminal de conducteur (3) ; le conducteur sélectionnant une place de stationnement disponible par le terminal de conducteur (3) et confirmant une réservation ; puis le serveur en nuage (1) mettant à jour les informations de réservation de place de stationnement vers le terminal de suveillance (2) et le terminal de conducteur (3) respectivement ;
lesdites informations de réservation de place de stationnement comprenant au moins le code de place de stationnement, le numéro de plaque d'immatriculation du véhicule, l'heure de début de stationnement et la durée de stationnement ;
1.3 détection de l'état d'occupation d'une place de stationnement,
lors de l'entrée ou de la sortie du véhicule de la place de stationnement, le module de détection de véhicule (4) situé dans la place de stationnement détectant le changement d'état d'occupation de la place de stationnement ; le module de détection de véhicule (4) transmettant les informations d'état d'occupation de la place de stationnement au terminal de surveillance (2), au terminal de conducteur (3) et au serveur en nuage (1) respectivement ;
1.3.1 lorsque le module de détection du véhicule (4) détecte que la place de stationnement est occupé, alors l'état de cette place de stationnement est mis une place de stationnement occupée ; ledit serveur en nuage (1) générant trois types d'états, à savoir : occupation normale, occupation sans enregistrement et occupation non réglée, selon les informations d'état d'occupation de la place de stationnement, les informations de la place de stationnement, les informations de réservation de la place de stationnement et les informations de stationnement ;
lesdites informations de stationnement comprenant au moins le code de la place de stationnement, le numéro de plaque d'immatriculation du véhicule et l'heure d'enregistrement de la place de stationnement et/ou de liberation de la place de stationnement ;
1.3.2 lorsque la place de stationnement est détecté comme étant libre par le module de détection de véhicule (4), alors l'état d'occupation de la place de stationnement est une place de stationnement libre ; ledit serveur en nuage (1) générant quatre types d'états, à savoir : une place de stationnement disponible, une place de stationnement réservé, une place de stationnement libre non réglée et une place de stationnement en panne, selon les informations d'état d'occupation de la place de stationnement, les informations de la place de stationnement, les informations de réservation de la place de stationnement et les informations de stationnement ;
1.4 Conformément aux états des places de stationnement aux étapes 1.3.1 et 1.3.2, toutes les places de stationnement dans le parking étant marquées par un texte ou un signe graphique et une couleur, et présentées sur le module de carte électronique (7) du terminal de surveillance(2), du terminal de conducteur (3) et du composant de terminal sur place (5), les conducteurs utlisant le terminal du conducteur (3) pour réserver, enregistrer et retirer les places de stationnement ; et les superviseurs utilisant le terminal de surveillance (2) pour gérer les places de stationnement.

5. La méthode de service et de gestion des places de stationnement basée sur des informations d'état de places de stationnement selon la revendication 4, caractérisé également par :
les conducteurs signalent une anomalie ou déposent une plainte à l'aide du terminal de conducteur (3) ; les superviseurs effectuent une inspection de la tournée, recueillent des informations, gèrent la place de stationnement ou ajustent les informations sur l'état de la place de stationnement à l'aide du terminal de surveillance (2) ;
les procédures opérationnelles détaillées pour l'enregistrement de la place de stationnement à la suite de ladite étape 1.3.1 étant les suivantes :
lorsqu'un véhicule entre dans la place de stationnement, le terminal de conducteur (3) reçoit une information d'état d'occupation de la place de stationnement transmise par le module de détection de véhicule (4) dans ladite étape 1. 3 ; le terminal de conducteur (3) envoie un message de bienvenue au conducteur, affichant le code de la place de stationnement et demandant au conducteur de s'enregistrer dans la place de stationnement ; lorsque le conducteur confirme son enregistrement, le terminal de conducteur (3) transmet les informations d'enregistrement au serveur en nuage (1), qui reçoit et compare les informations ; en cas de comparaison réussie, le serveur en nuage (1) lie le numéro de plaque d'immatriculation du véhicule et le code de la place de stationnement, enregistre l'heure d'enregistrement, et fournit un retour d'informations pour l'enregistrement réussi de la place de stationnement au terminal de surveillance(2) et au terminal de conducteur (3) ; les informations d'enregistrement comprenant au moins le code de la place de stationnement, le numéro de plaque d'immatriculation du véhicule, l'heure d'enregistrement de la place de stationnement, l'heure de fin de stationnement programmée et la durée de stationnement ;
les procédures opérationnelles détaillées pour le contrôle de sortie de la place de stationnement après ladite étape 1.3.2 étant les suivantes :
avant la sortie du véhicule de la place de stationnement, le conducteur vérifie d'abord la place de stationnement en utilisant le terminal de conducteur (3) ; le terminal de conducteur (3) transmet des informations de vérification au serveur en nuage (1), qui reçoit et compare les informations ; en cas de comparaison réussie, le serveur en nuage (1) dissocie le numéro de plaque d'immatriculation du véhicule et le code de la place de stationnement, enregistre l'heure de vérification, et fournit un retour d'informations de confirmation pour la vérification de la place de stationnement au terminal de surveillance(2) et au terminal de conducteur (3) ; lorsque le véhicule sort de la place de stationnement, l'information mise à jours d'état d'occupation de la place de stationnement est détectée par le module de détection de véhicule (4) et transmise au serveur en nuage (1) par l'intermédiaire du module de communication en nuage ; le serveur en nuage (1) fournissant un retour de l'information pour le contrôle réussi de la place de stationnement au terminal de surveillance (2) et au terminal de conducteur (3) ; l'information de contrôle susmentionnée comprenant au moins le code de la place de stationnement, le numéro de plaque d'immatriculation du véhicule et l'heure de régler de la place de stationnement.

6. La méthode de service et de gestion des places de stationnement basée sur des informations d'état de places de stationnement selon la revendication 5, caractérisé également par :
l'enregistrement des places de stationnement dans ladite étape 1.2 étant effectué à l'aide du composant de terminal sur place (5), avec les étapes de fonctionnement détaillées suivantes :
A. Stationnement-maintenant(Parknow)
lorsque des informations sur l'état de la place de stationnement sont présentées sur ledit composant de terminal sur place (5), le conducteur transmet la durée de stationnement et le numéro de plaque d'immatriculation du véhicule au composant de terminal sur place (5) par le terminal de conducteur (3), et sélectionne une place de stationnement disponible par l'intermédiaire du composant de terminal sur place (5) pour enregistrer une place de stationnement ; le composant de terminal sur place (5) transmet les informations pour l'enregistrement de la place de stationnement au serveur en nuage (1), au terminal de serveillance (2) et au terminal de conducteur correspondant (3) respectivement ; après recevoir les informations sur l'enregistrement de la place de stationnement, le serveur en nuage (1) lie le numéro de plaque d'immatriculation du véhicule correspondant et le code de place de stationnement, enregistre l'heure d'enregistrement de la place de stationnement, fournit un retour de l'information pour l'enregistrement réussi de la place de stationnement au terminal de surveillance (2) et au terminal de conducteur (3) ; l'état de la place de stationnement étant présenté conformément aux informations d'enregistrement ;
B. stationnement réservé
lorsque les informations de réservation de la place de stationnement sont transmises au composant de terminal sur place (5) par l'intermédiaire du terminal de conducteur (3) par le conducteur, le composant de terminal sur place (5) comparant les informations de réservation de la place de stationnement avec l'heure actuelle ; lorsque la comparaison est effectuée, le composant de terminal sur place (5) transmettant des informations pour l'enregistrement de la place de stationnement au serveur en nuage (1), au terminal de surveillance(2) et au terminal de conducteur (3) respectivement, le serveur en nuage (1) liant le numéro de plaque d'immatriculation de véhicule correspondant et le code de place de stationnement, enregistrant l'heure d'enregistrement de la place de stationnement, fournissant un retour d'informations sur l'enregistrement réussi de la place de stationnement au terminal de surveillance(2) et au terminal de conducteur (3) ; l'état de la place de stationnement étant présenté en cohérence avec les informations d'enregistrement ;
le contrôle des places de stationnement à l'étape 1.3.2 est effectué à l'aide du composant de terminal sur place (5), les étapes de fonctionnement étant détaillées comme suit :
le conducteur transmet les informations de sortie au composant de terminal sur place (5) par le terminal de conducteur (3) ; le composant de terminal sur place (5) transmet des informations de confirmation au serveur en nuage (1), au terminal de surveillance (2) et au terminal de conducteur (3) respectivement pour la sortie de la place de stationnement ; lorsque le véhicule sort de la place de stationnement, la mise à jour des informations d'occupation de la place de stationnement est détectée par le module de détection de véhicule (4) et transmis au serveur en nuage (1) par le module de communication en nuage ; le serveur en nuage (1) transmet les informations au terminal de surveillance(2) et au terminal de conducteur (3) pour le contrôle de la place de stationnement; le serveur en nuage (1) dissocie le numéro de plaque d'immatriculation du véhicule correspondant et le code de la place de stationnement, enregistre l'heure de libérer la place de stationnement, et fournit un retour d'informations sur le contrôle réussi de la place de stationnement au terminal de surveillance(2) ; l'état de la place de stationnement est présenté en cohérence avec les informations sur le contrôle réussi ;
ledit terminal de conducteur (3) transmettant des rapports anormaux et des plaintes par l'intermédiaire du composant de terminal sur place (5), y compris un défaut de place de stationnement, et une occupation anormale de la place de stationnement ;
ledit terminal de surveillance (2) gère les places de stationnement par l'intermédiaire du composant de terminal sur place (5) et par une inspection de tournée, y compris l'indisponibilité de la place de stationnement, l'occupation anormale de la place de stationnement, et le cas échéant l'enregistrement et le départ de la place de stationnement pour le compte du conducteur ;
ledit terminal de contrôle de stationnement (6) effectuant une application sur place par l'intermédiaire du composant de terminal sur place (5) et par une inspection de tournée, y compris l'application d'une contravention et l'exécution d'une violation..

7. La méthode de service et de gestion des places de stationnement basée sur des informations d'état de places de stationnement selon la revendication 6, caractérisé également par :
ledit composant de terminal sur place (5) comprenant le terminal de stationnement sur place (51) ;
pour un terminal de conducteur (3), la méthode de stationnement comprenant les étapes suivantes :
selon l'état de la place de stationnement présenté par le terminal de stationnement sur place (51), garer le véhicule dans une place de stationnement disponible ; et entrer la durée du stationnement et le numéro de plaque d'immatriculation du véhicule par l'intermédiaire du terminal de stationnement sur place (51) pour enregistrer la place de stationnement et effectuer le paiement comme requis ; l'état de la place de stationnement étant présenté en cohérence avec les informations d'enregistrement après l'enregistrement réussi de la place de stationnement ; à la fin du stationnement, la place de stationnement est d'abord vérifiée par le terminal de stationnement sur place (51), et ensuite le véhicule est déplacé de la place de stationnement correspondant, l'état de la place de stationnement étant présenté en cohérence avec le fait de la place de stationnement après le contrôle réussi de la place de stationnement ;
pour le superviseur en utilisant le terminal de stationnement sur place (51), la méthode de gestion de place de stationnement comprenant les étapes suivantes :
vérifier l'occupation anormale des places de stationnement en fonction de l'état des places de stationnement présenté sur le le terminal de stationnement sur place (51), et entrer le numéro de plaque d'immatriculation du véhicule et le fait anormal par l'intermédiaire du le terminal de stationnement sur place (51), enregistrer et gérer l'occupation anormale ;
pour l'agent de contrôle du stationnement en utilisant le terminal de stationnement sur place (51), la méthode de gestion de la place de stationnement comprenant les étapes suivantes :
vérifier l'occupation anormale de places de stationnement en fonction de l'état de la place de stationnement présenté sur le terminal de stationnement sur place (51) ; entrer le numéro de plaque d'immatriculation du véhicule et le fait anormal par l'intermédiaire du terminal de stationnement sur place (51) ; enregistrer et gérer l'occupation anormale.

8. La méthode de gestion et de service de places de stationnement basé sur des informations d'état de places de stationnement selon la revendication 6, caractérisé également par :
ledit composant de terminal sur place (5) comprenant le terminal de parking sur place (52) ;
pour le conducteur sans terminal de conducteur (3), la méthode de stationnement comprenant les étapes suivantes :
après l'entrée du véhicule dans le parking, le conducteur vérifie et sélectionne la place de stationnement disponible, gare le véhicule et enregistre le code de la place de stationnement, puis entre le code de la place de stationnement, le numéro de plaque d'immatriculation du véhicule et la durée du stationnement par l'intermédiaire du terminal de parking sur place (52) pour s'enregistrer et effectuer le paiement requis ; l'état de la place de stationnement étant présenté en cohérence avec les informations d'enregistrement après l'enregistrement réussi de la place de stationnement ; à la fin du stationnement, l'entrée du code de place de stationnement dans le terminal de parking sur place (52) pour enregistrer la place de stationnement ; l'état de la place de stationnement étant présenté en cohérence avec le fait de la place de stationnement après l'enregistrement réussi de la place de stationnement ;
pour le superviseur en utlisant le terminal de parking sur place (52), la méthod de gestion de places de parking comprenant les étapes suivantes :
vérifier l'occupation anormale des places de stationnement en fonction de l'état de la place de stationnement présenté sur le terminal de champ de parking (52) ; entrer le numéro de plaque d'immatriculation du véhicule et le cas anormal par le terminal de champ de parking (52), enregistrer et gérer l'occupation anormale.

9. La méthode de gestion et de service de places de stationnement basé sur des informations d'état de places de stationnement selon l'une quelconque des revendications 4 à 8, caractérisé également par :
lorsque ledit véhicule n'a pas été enregistré ou n'a pas réussi à enregistrer la place de stationnement, le numéro de la plaque d'immatriculation du véhicule étant absent en cas d'occupation sans enregistrement ; en cas de stationnement prolongé et après l'enregistrement de la place de stationnement, le numéro de la plaque d'immatriculation du véhicule étant celui du véhicule correspondant ;
ledit état de la place de stationnement comprenant également la place de stationnement indisponible et la place de stationnement répondant ;
ladite place de stationnement indisponible signifiant une place de stationnement non disponible pour la réservation et le stationnement ;
ledit répondant de place de stationnement signifiant une place de stationnement pour laquelle une plainte anormale est en instance ; les informations pour le répondant de place de stationnement étant protégées dans un résultat de recherche et lors de la réservation sans être réservées par les conducteurs.

10. La méthode de gestion et de service de places de stationnement basé sur des informations d'état de places de stationnement selon la revendication 9, caractérisé également par :
à partir des informations sur l'état de la place de stationnement dans ladite étape 1. 3, les places de stationnement avec une occupation sans enregistrement, une occupation non réglée, une place libre non réglée et le défaut de la place de stationnement étant tous des états anormaux ; et le serveur en nuage (1) fournissant un retour des informations pour les quatre types d'états anormaux de la place de stationnement mentionnés ci-dessus au superviseur par l'intermédiaire du terminal de surveillance(2), le superviseur gérant les places de stationnement correspondants par navigation en utilisant le code de la place de stationnement et la vue en plan des états de la place de stationnement du module de carte électronique (7), ajustant les informations d'état de la place de stationnement en cohérence avec l'état actuel d'une place de stationnement, et distribuant les résultats de traitement au serveur en nuage (1) et au terminal de conducteur (3), respectivement ;
le conducteur recueillant des informations d'un état anormal d'un espace de stationnement à l'aide du terminal de conducteur (3) et faisant un rapport au terminal de surveillance (2) ou déposant des plaintes au terminal de contrôle de stationnement (6) avec les informations recueillies ;
le superviseur gérant les places de stationnement avec un état anormal par le terminal de surveillance (2), ajustant les informations d'état de la place de stationnement cohérentes avec l'état réel de la place de stationnement, collectant des informations de l'état anormal de la place de stationnement, et faisant un rapport au terminal de contrôle de stationnement (6) avec les informations recueillies ;
le terminal de contrôle du stationnement (6) traitant les plaintes anormales, collectant en outre des informations sur place et traitant la condition anormale ; enfin, les résultats du traitement étant transmis au serveur en nuage (1), au terminal de surveillance (2) et au terminal de conducteur (3) correspondants respectivement ;
ledit véhicule mis en cause étant limité au moment de la réservation et de l'enregistrement de la place de stationnement, ni pour réserver une place de stationnement ni pour stationner immédiatement.
